(19) Europäisches Patentamt
European Patent Office
Office européen des brevets

(11) **EP 4 383 050 B1**

(12) **EUROPEAN PATENT SPECIFICATION**

(45) Date of publication and mention
of the grant of the patent:
**22.10.2025 Bulletin 2025/43**

(21) Application number: **23789481.1**

(22) Date of filing: **24.10.2023**

(51) International Patent Classification (IPC):
*G06F 3/01* *(2006.01)* *G02B 27/01* *(2006.01)*
*H04W 4/80* *(2018.01)* *G06F 1/16* *(2006.01)*

(52) Cooperative Patent Classification (CPC):
**G06F 3/01; G02B 27/01; G02B 27/017;
G06F 1/1626; G06F 1/163; G06F 1/1698;
G06F 3/011; G06F 3/04815; G06F 3/0484;
G06N 20/00; H04M 1/72412; H04M 1/72457;
H04W 4/80;** H04M 1/724094

(86) International application number:
**PCT/KR2023/016582**

(87) International publication number:
**WO 2024/090964 (02.05.2024 Gazette 2024/18)**

(54) **ELECTRONIC DEVICE FOR CONTROLLING DISPLAY DEVICE AND METHOD FOR OPERATING SAME**

ELEKTRONISCHE VORRICHTUNG ZUR STEUERUNG EINER ANZEIGEVORRICHTUNG UND VERFAHREN ZUM BETRIEB DAVON

DISPOSITIF ÉLECTRONIQUE SERVANT À COMMANDER UN DISPOSITIF D'AFFICHAGE ET PROCÉDÉ DE FONCTIONNEMENT ASSOCIÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.10.2022 KR 20220137164
02.12.2022 KR 20220166983**

(43) Date of publication of application:
**12.06.2024 Bulletin 2024/24**

(73) Proprietor: **Samsung Electronics Co., Ltd.
Suwon-si, Gyeonggi-do 16677 (KR)**

(72) Inventors:
• **KIM, Hyeonseong
Suwon-si, Gyeonggi-do 16677 (KR)**

• **PARK, Chanung
Suwon-si, Gyeonggi-do 16677 (KR)**
• **HWANG, Minkyung
Suwon-si, Gyeonggi-do 16677 (KR)**

(74) Representative: **HGF
HGF Limited
1 City Walk
Leeds LS11 9DX (GB)**

(56) References cited:
**EP-A1- 2 996 359    KR-A- 20160 104 288
KR-A- 20170 027 627    KR-A- 20190 099 774
KR-A- 20200 029 271    US-A1- 2021 034 145
US-A1- 2022 253 264**

**Description**

[Technical Field]

The present disclosure relates to an electronic device configured to control a display device, and a method for operating the same.

[Background Art]

Recently, electronic devices may be equipped with various functions. For example, not only a communication function, but also an entertainment function (for example, gaming), a multimedia function (for example, music/video playback), communication and security functions for mobile banking, a scheduling function, and an electronic wallet function may be integrated into a single electronic device. Such electronic devices have become compact such that users can conveniently carry and wear the same. In line with development of electronic/communication technologies, such electronic devices have become compact/lightweight to such an extent that, even when worn on human bodies, they can be used with negligible inconvenience.

Wearable electronic devices have been increasingly widely used as a type of electronic devices that can be conveniently used in daily life and can be carried or worn. For example, wearable electronic devices may be implemented in various types, such as accessories (for example, glasses, watches, rings), garments, or bioimplants, and may collect detailed information regarding peripheral environments or individuals' physical changes in real time and provide the same.

Reference is also made to document EP2996359A1, which discloses the preamble of the independent claims.

[Detailed Description of the Invention]

[Technical Problem]

[Technical Solution]

An electronic device according to an embodiment may include a GPS module, a communication module, a memory, and a processor. The processor according to an embodiment may be configured to identify, using the GPS module, that the electronic device has entered a designated space. The processor according to an embodiment may be configured to receive first communication signal information on a communication signal received by a wearable electronic device, from the wearable electronic device through the communication module. The processor according to an embodiment may be configured to identify a first zone in which the wearable electronic device is located, among a plurality of zones included in the designated space by performing clustering on the first communication signal information. The processor according to an embodiment may be configured to transmit information on the first zone to the wearable electronic device through the communication module. The processor according to an embodiment may be configured to, based on transmitting the information on the first zone, obtain information on first activity of a user related to the first zone from the wearable electronic device through the communication module. The processor according to an embodiment may be configured to obtain a first command for controlling a head mounted display (HMD) device, based on the first activity information and the information on the first zone. The processor according to an embodiment may be configured to transmit the first command to the HMD device through the communication module.

A method for operating an electronic device according to an embodiment may include identifying, using a GPS module included in the electronic device, that the electronic device has entered a designated space. The method for operating the electronic device according to an embodiment may include receiving first communication signal information on a communication signal received by a wearable electronic device, from the wearable electronic device through a communication module included in the electronic device. The method for operating the electronic device according to an embodiment may include identifying a first zone in which the wearable electronic device is located, among a plurality of zones included in the designated space by performing clustering on the first communication signal information. The method for operating the electronic device according to an embodiment may include transmitting information on the first zone to the wearable electronic device through the communication module. The method for operating the electronic device according to an embodiment may include based on transmitting the information on the first zone, obtaining information on first activity of a user related to the first zone from the wearable electronic device through the communication module. The method for operating the electronic device according to an embodiment may include obtaining a first command for controlling a head mounted display (HMD) device, based on the first activity information and the information on the first zone. The method for operating the electronic device according to an embodiment may include transmitting the first command to the HMD device through the communication module.

[Advantageous Effects]

[Brief Description of Drawings]

FIG. 1 is a block diagram of an electronic device in a network environment, according to an example of the present disclosure.

FIG. 2A is a schematic diagram of an electronic system according to an example of the present disclosure.

FIG. 2B is a block diagram illustrating a schematic configuration of an electronic system according to an example of the present disclosure.

FIG. 3 illustrates operations of a wearable electronic device, an electronic device, and a video see-through (VST) device according to an example of the present disclosure.

FIG. 4A is a flowchart illustrating an operation of checking a user's activity by a wearable electronic device according to an example of the present disclosure.

FIG. 4B illustrates a machine learning-based classifier model used to identify a user's activity by a wearable electronic device according to an example of the present disclosure.

FIG. 5A is a flowchart illustrating an operation of controlling a VST device by an electronic device according to an example of the present disclosure.

FIG. 5B is a flowchart illustrating an operation of training a user's usage pattern of a VST device by an electronic device according to an example of the present disclosure.

FIG. 6 is a flowchart illustrating an operation of performing clustering by an electronic device according to an example of the present disclosure.

FIG. 7A illustrates operations of performing clustering by an electronic device according to an example of the present disclosure.

FIG. 7B illustrates clustered zones in a designated space according to an example of the present disclosure.

FIG. 8 illustrates an operation of labeling at least one zone included in a designated space by an electronic device according to an example of the present disclosure.

FIG. 9A is a block diagram of an inference model through which an electronic device performs labeling of at least one zone included in a designated space according to an example of the present disclosure.

FIG. 9B is a table showing a result of labeling at least one zone included in a designated space by an electronic device according to an example of the present disclosure.

FIG. 10 is a flowchart illustrating an operation of an electronic device training a usage pattern of a user's VST device according to an example of the present disclosure.

FIG. 11 illustrates an operation of controlling a VST device by a wearable electronic device according to an example of the present disclosure.

FIGS. 12A to 12D illustrate an operation of displaying augmented reality information by a VST device according to an example of the present disclosure.

[Mode for Carrying out the Invention]

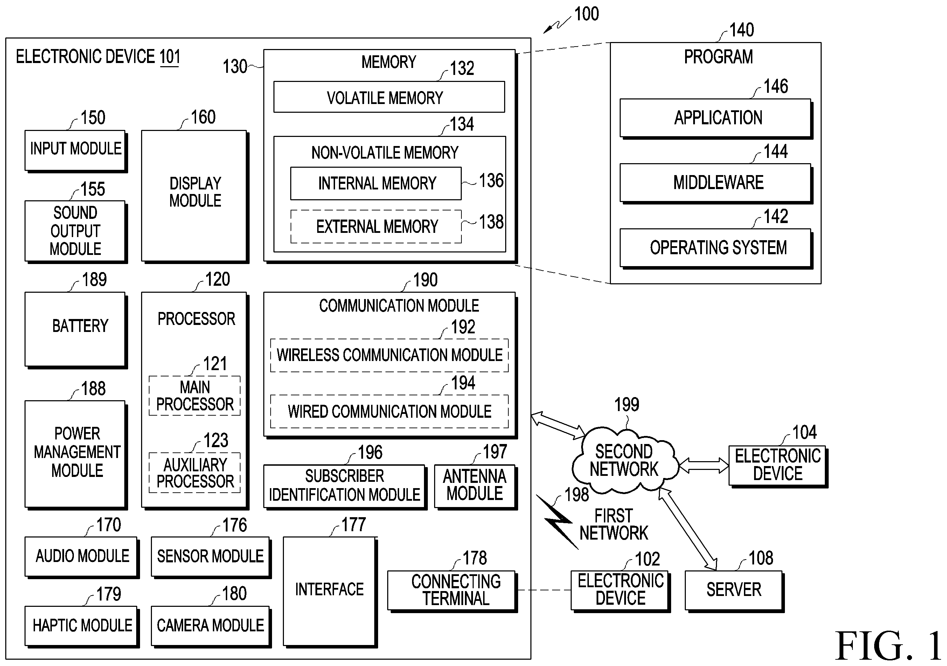

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g.,

the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

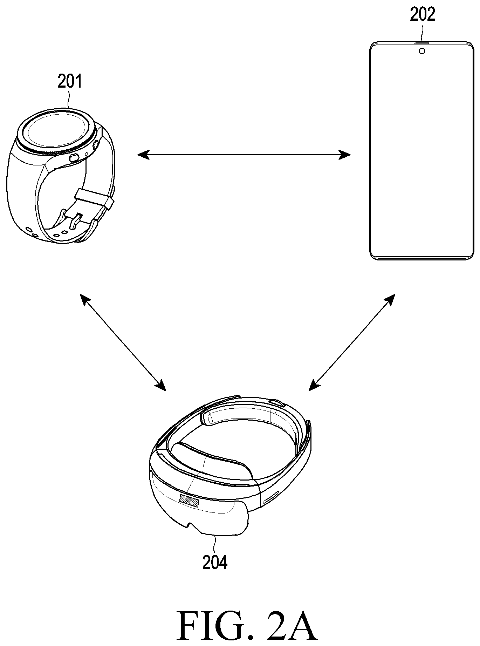

FIG. 2A is a schematic diagram of an electronic system according to an example of the present disclosure.

Referring to FIG. 2A, according to an embodiment, an electronic system may include a wearable electronic device 201, an electronic device 202, and a video see-through (VST) device 204. The wearable electronic device 201, the electronic device 202, and the video see-through (VST) device 204 may transmit and receive data (or information) to and from each other. For example, each of the wearable electronic device 201, the electronic device 202, and the video see-through (VST) device 204 may be implemented the same as or similar to the electronic devices 101, 102, and 104 in FIG. 1.

According to an embodiment, the electronic system may be implemented in a designated space. For example, the designated space may be a space corresponding to a geo-fenced area/location configured using a GPS (or GNSS) signal. For example, the designated space may include a plurality of zones. For example, the designated space may be a house space, an office space, or a space inside a building. When the designated space is a house space, the plurality of zones may for example correspond to the rooms of the house.

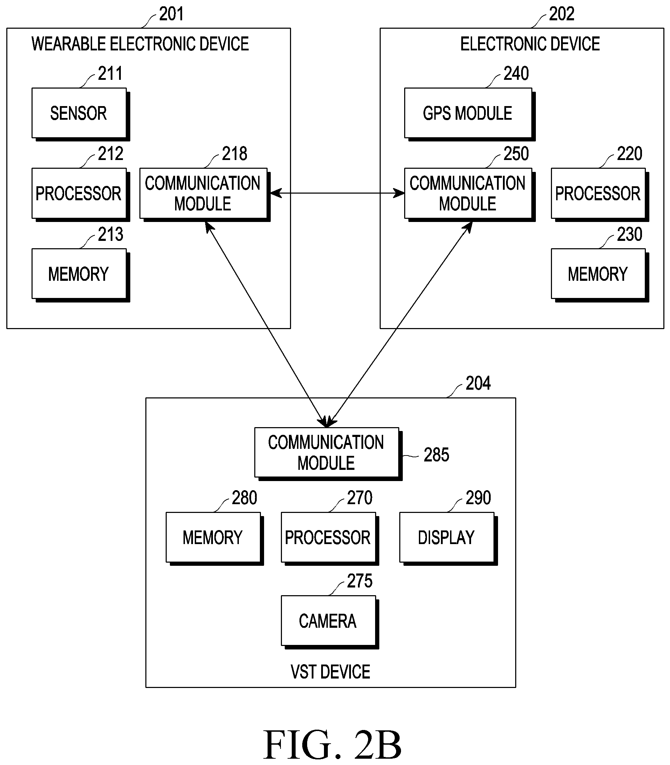

According to an embodiment, the wearable electronic device 201 may sense or identify user's activity. For example, the wearable electronic device 201 may be implemented as a smart watch. For example, the wearable electronic device 201 may obtain a sensing signal corresponding to the user's motion through a sensor (e.g., the sensor 211 in FIG. 2B) while being worn by the user. However, the wearable electronic device 201 may sense a plurality of different values and obtain a plurality of sensing signals. The wearable electronic device 201 may analyze the sensing signal to determine an activity performed by the user. For example, activities may include walking, running, stretching, sleeping, brushing teeth, washing hands, flushing the toilet, eating, typing on a keyboard, studying or working, reading, and the like.

According to an embodiment, the wearable electronic device 201 may receive a communication signal (e.g., Wi-Fi signal) from an access point (or Wi-Fi router) located within a designated space. The wearable electronic device 201 may obtain communication signal information (e.g., basic service set identifier (BSSID), service set identifier (SSID), and receiver signal strength indicator (RSSI)) by analyzing the communication signal.

According to an embodiment, the wearable electronic device 201 may perform clustering on communication signal information to identify a zone (or a specific zone) where the wearable electronic device 201 is located within a designated space. Alternatively, the wearable electronic device 201 may identify, through the electronic device 202, the zone in the designated space where the wearable electronic device 201 is located. **In** this case, the electronic device 202 may perform clustering on the communication signal information received from the wearable electronic device 201 and transmit information on the clustered zones to the wearable electronic device 201.

According to an embodiment, the wearable electronic device 201 may transmit activity information and information on a zone where the wearable electronic device 201 is located to the electronic device 202. For example, the information on a zone may refer to information indicating the zone in a designated space where the wearable electronic device 201 is located, based on information on the clustered zones. For example, the information on a zone may indicate that the wearable electronic device 201 is located in a specific zone (e.g., a bathroom, a living room, a study, or a hallway) among a plurality of zones included in a home.

FIG. 2A illustrates the wearable electronic device 201 as a smart watch, but is not limited thereto. For example, the wearable electronic device 201 may be implemented as many different types of wearable electronic device (e.g., a smart ring).

According to an embodiment, the electronic device 202 may perform clustering on communication signal information received from the wearable electronic device 201 (i.e. when the wearable electronic device 201 does not perform clustering). The electronic device 202 may identify a cluster containing the communication signal information among clusters for the designated space and identify a zone corresponding to the identified cluster. The electronic device 202 may transmit information on the clustered zones to the wearable electronic device 201.

According to an embodiment, the electronic device 202 may control the VST device 204, based on activity information received from the wearable electronic device 201 and information on the zone where the wearable electronic device 201 is located. For example, the electronic device 202 may identify a pre-trained (i.e. a previously recorded, identified, or generated) user's usage pattern (or behavior pattern) of the VST device 204, based on the activity information received from the wearable electronic device 201 and the information on the zone where the wearable electronic device 201 is located. The electronic device 202 may control the VST device 204, based on the identified usage pattern. For example, the electronic device 202 may control the VST device 204, based on a usage pattern of the VST device 204 used when the user is located in the corresponding zone while performing the corresponding activity. For example, the electronic device 202 may transmit a command to execute a specific application or display specific augmented reality information to the VST device 204. For example, the electronic device 202 may be implemented as a smartphone.

According to an embodiment, the VST device 204 may perform a specific function or be changed into a specific state, based on a command received from the electronic device 202. For example, the VST device 204 may execute a specific application or display specific augmented reality information on a display (e.g., the display 290 in FIG. 2B), based on a command received from the electronic device 202. For example, the VST device 204 may be implemented as a head mounted display (HMD) device. For example, the VST device 204 may be implemented as a virtual reality (VR) device.

FIG. 2B is a block diagram illustrating a schematic configuration of an electronic system according to an example of the present disclosure.

Referring to FIG. 2B, according to an embodiment, the wearable electronic device 201 may include a sensor 211, a processor 212, a memory 213, and a communication module 218.

According to an embodiment, the processor 212 may control overall operations of the wearable electronic device 201. For example, the processor 212 may be implemented the same as or similar to the processor 120 in FIG. 1.

According to an embodiment, the processor 212 may sense or identify the user's activity through the sensor 211 (e.g., the sensor module 176 in FIG. 1). For example, the processor 212 may identify the user's activity through the sensor 211 when identifying that the user has entered a designated space (e.g., a house, an office, or a building). For example, the processor 212 may identify that the user has entered a designated space, based on the notification received from the electronic device 202.

According to an embodiment, the processor 212 may analyze a signal obtained through the sensor 211 to identify an activity performed by the user while the wearable electronic device 201 is worn by the user. For example, the processor 212 may analyze one or more of the user's motion, the user's heart rate, the user's voice, ambient sound, ambient air pressure or temperature through the sensor 211. For example, the processor 212 may execute a machine learning-based classifier model to analyze a signal or signals acquired through the sensor(s) 211 and to identify the user's activity. The processor 212 may store information on the identified activity (hereinafter, activity information) in the memory 213 (e.g., the memory 130 in FIG. 1).

According to an embodiment, the processor 212 may receive, when the user's activity is identified, a communication signal (e.g. a Wi-Fi signal) from an access point (e.g. a Wi-Fi router) located in the designated space through the communication module 218. For example, the processor 212 may deactivate the communication module 218 or operate the communication module 218 with a lower power until the user's activity is identified. When the user's activity is identified, the processor 212 may activate the communication module 218 to receive a communication signal from the access point located within the designated space. Although an access point is referred to here, the communication signal may be obtained from any device that is associated with a particularly location in the designated space and transmits communication signal information that the wearable electronic device 201 can receive and extract relevant information from.

According to an embodiment, the processor 212 may obtain communication signal information on a communication signal. For example, the communication signal information may include address information (e.g., BSSID or MAC address) of the access point from which a communication signal is transmitted. In addition, the communication signal information may include information (e.g., RSSI) indicating the strength of a communication signal.

For example, the processor 212 may identify an access point located within the designated space, based on a basic service set identifier (BSSID) included in a communication signal. For example, the location of the corresponding access point within the designated space may be identified in advance. The processor 212 may obtain location information indicating a location at which the communication signal is received (or the current location of the wearable electronic device 201) by analyzing the strength of the communication signal (e.g., RSSI).

According to another embodiment, the processor 212 may receive a communication signal based on ultra-wideband (UWB) technology and obtain information indicating a location of the wearable electronic device 201, based on the received communication signal. For example, the processor 212 may obtain a communication signal based on UWB technology from an electronic device installed or located within the designated space. The processor 212 may determine a distance between the wearable electronic device 201 and the corresponding electronic device by analyzing the communication signal. The processor 212 may determine the location of the wearable electronic device 201, based on the determined distance.

The processor 212 may identify the location of the wearable electronic device 201 by analyzing various types of communication signals in addition to the above-described communication signals. For example, a method using various communication signals may be applied as a method for identifying the location of the wearable electronic device 201.

According to an embodiment, the processor 212 may transmit communication signal information to the electronic device 202 through the communication module 218. The processor 212 may receive information on clustered zones for communication signal information from the electronic device 201 through the communication module 218.

According to an embodiment, the processor 212 may identify a first zone in which the wearable electronic device 201 is located, among a plurality of zones included in the designated space, based on information on clustered zones. For example, the first zone may refer to a zone where a communication signal is received from an access point or a zone in a designated space where the wearable electronic device 201 is located.

According to an embodiment, the processor 212 may transmit activity information and information on the first zone to the electronic device 202. The electronic device 202 may control the VST device 204, based on activity information and information about the first zone.

According to an embodiment, the wearable electronic device 201 may further include a GPS module (not shown). For example, the processor 212 may identify that the wearable electronic device 201 has entered or is present in a designated space, through a GPS module. When the processor 212 identifies that the wearable electronic device 201 has entered or is present in a designated space, the processor 212 may start an operation of identifying the user's activity by using the sensor 211.

According to an embodiment, the electronic device 202 may include a processor 220, a memory 230, a GPS module 240, and a communication module 250.

According to an embodiment, the processor 220 may control overall operations of the electronic device 202. For example, the processor 220 may be implemented the same as or similar to the processor 120 in FIG. 1.

According to an embodiment, the processor 220 may identify that the electronic device 202 has entered or is present in a designated space, through the GPS module 240. For example, the processor 220 may configure a geo-fence in a designated space by using a GPS signal. For example, the processor 220 may identify entry or presence in a designated space, based on a GPS signal received through the GPS module 240.

According to an embodiment, when the processor 220 identifies that the electronic device 202 has entered or is present in a designated space, the processor 220, may transmit a notification informing that the electronic device 202 has entered the designated space to the wearable electronic device 201 through the communication module 250.

According to an embodiment, the processor 220 may receive first communication signal information on the communication signal, received by the wearable electronic device 201, from the wearable electronic device 201 through the communication module 250.

According to an embodiment, the processor 220 may perform clustering on the first communication signal information. For example, clustering may refer to an operation for identifying or distinguishing a zone corresponding to the first communication signal information, among a plurality of zones included in the designated space. For example, clustering performed by the processor 220 may refer to a zone clustering. The processor 220 may perform clustering to identify a clustered zone corresponding to the first communication signal information. The processor 220 may transmit information on the clustered zone to the wearable electronic device 201 through the communication module 250. The clustering operation is described in more detail below.

According to an embodiment, the processor 220 may receive or obtain information on a first activity of the user and information on a first zone where the wearable electronic device 201 is located, from the wearable electronic device 201 through the communication module 250.

According to an embodiment, the processor 220 may produce or obtain a command to control the VST device 204, based on the first activity information and the information on the first zone. Based on the first activity and the first zone, the processor 220 may identify a usage pattern of the VST device 204, pre-trained with respect to the VST device 204. For example, a pre-trained usage pattern of the VST device 204 may be stored in the memory 230 (e.g., the memory 130 in FIG. 1). The processor 220 may determine to display specific augmented reality information or execute a specific function, based on the pre-trained usage pattern. The processor 220 may produce or obtain a command to execute the determined specific augmented reality information or specific function. For example, specific functions, information display, user commands, and/or user requests (i.e. device usage) may be have been previously performed via the VST device 204 when the first activity was performed in the first zone, and the processor 220 may determine to perform at least some of these when similar conditions occur again e.g. when the first activity is performed in the first zone. However, in some examples only overlapping activities and zones may be required, such as a first activity but a zone that neighbors the first zone.

According to an embodiment, the processor 220 may transmit a command to the VST device 204 through the communication module 250. When receiving a command, the VST device 204 may display specific augmented reality information corresponding to the command or execute a specific function.

According to an embodiment, the VST device 204 may include a processor 270, a camera 275, a memory 280, a communication module 285, and a display 290. For example, the VST device 204 may be implemented as an HMD device (e.g., a VR HMD device).

According to an embodiment, the processor 270 may control the overall operation of the VST device 204. For example, the processor 270 may be implemented the same as or similar to the processor 120 in FIG. 1.

According to an embodiment, the processor 270 may display an image captured by the camera 275 on the display 290. For example, the processor 270 may display an image captured by the camera 275 on the display 290 in real time.

According to an embodiment, the processor 270 may receive a command from the electronic device 202 through the communication module 285. The processor 270 may display specific augmented reality information corresponding to the command on the display 290. For example, the processor 270 may overlappingly display augmented reality information on an image captured through the camera 275. Alternatively, the processor 270 may execute a specific function corresponding to the command. For example, the processor 270 may execute, based on the command, a specific application stored in the memory 280.

Existing VST devices may provide or display augmented reality information, based on an image obtained through a camera of the VST device. Alternatively, the VST device may provide augmented reality information only on surrounding objects recognized based on an image obtained through the camera. Consequently, the augmented reality information that the VST device may provide in these examples may be limited due to the reliance on currently available visual information i.e. determining what information to provide based on an image obtained through the camera.

According to the present disclosure, based on the user's location and activity identified through the wearable electronic device 201, the electronic device 202 may analyze a usage pattern of the VST device 204 and provide augmented reality information suitable for the user of the VST device 204 or recommend execution of a specific function according to the analysis result. Through this, the VST device 204 may provide suitable information (or augmented reality information) or functions to the user without relying on image analysis. This approach may allow an increased range of relevant functions, information etc. to be provided to a user of a VST device compared to existing approaches. Furthermore, the relevance of what is provided to the user may also be increased due to the leveraging of user activity and location information in combination with the user's previous usage of the VST.

In FIGS. 2A and 2B, the description focuses on the electronic device 202 controlling the VST device 204, however, the wearable electronic device 201 may also control the VST device 204 without the electronic device 202 or in combination with the electronic device 202. In such an example, operations previously specified as being performed by the electronic device 202 may be performed by the wearable electronic device 201 or a combination of the wearable device 201 and the electronic device 202. In another example, all operations may be performed by the VST device 204 or a combination of the VST device 204 and the wearable device 201 and/or the electronic device 202. Consequently, the previously described operations and those described below may be divided in any suitable manner between the any selection of the devices described with reference to FIGS. 2A and 2B.

In addition, again referring to FIGS. 2A and 2B, the description focuses on the electronic device 202 controlling the VST device 204, but the disclosure may not be limited thereto. For example, the electronic device 202 may also control another electronic device (e.g., a robot cleaner) capable of performing a communication function other than the VST device.

At least some of the operations of the wearable electronic device 201 described below may be performed by the processor 212. At least some of the operations of the electronic device 202 may be performed by the processor 220. In addition, at least some of the operations of the VST device 204 may be performed by the processor 270.

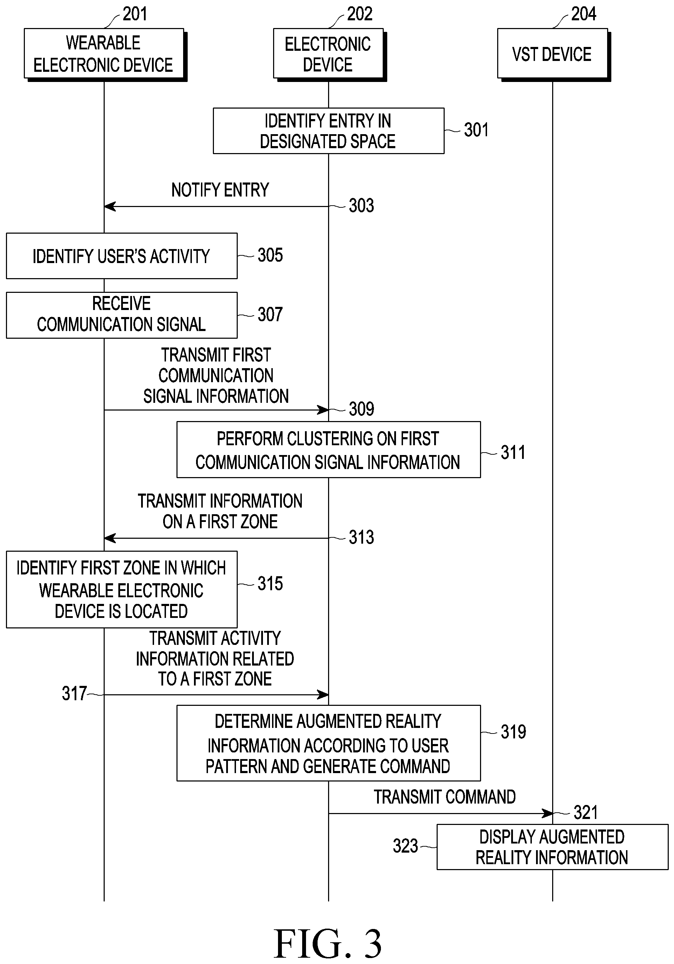

FIG. 3 illustrates operations of a wearable electronic device, an electronic device, and a VST device according to an example of the present disclosure.

Referring to FIG. 3, according to an embodiment, in operation 301, the electronic device 202 may identify entry in a designated space. In operation 303, the electronic device 202 may transmit notification for the entry in the designated space to the wearable electronic device 201.

According to an embodiment, in operation 305, the wearable electronic device 201 may identify the user's activity. For example, the user's activity may include walking, running, stretching, sleeping, brushing teeth, washing hands, flushing the toilet, and eating, typing on a keyboard, studying or working, reading, and the like.

According to an embodiment, in operation 307, the wearable electronic device 201 may receive a communication signal(s) from an access point(s) located within the designated space. For example, a communication signal may be received once the user's activity has been identified'.

According to an embodiment, in operation 309, the wearable electronic device 201 may transmit first communication signal information (e.g., BSSID, SSID, RSSI) of the communication signal(s) to the electronic device 202.

According to an embodiment, in operation 311, the electronic device 202 may perform clustering on the first communication signal information. In particular, the electronic device 202 may identify a cluster corresponding to the first communication signal information among a plurality of clusters, based on a clustering result. The electronic device 202 may identify the first area where the wearable electronic device 202 is located, based on the identified cluster. For example, information on the first zone may be information indicating in which zone the wearable electronic device 201 is located within the designated space, based on the result of clustering. For example, the first zone may indicate a specific zone where the wearable electronic device 201 is located among a plurality of zones (e.g., bathroom, room, living room, study, and hallway) included in the designated space (e.g., user's home, office related to the user).

In operation 307, an example of the first communication signal information is given with respect to a Wi-Fi signal or a BLE signal, but the disclosure is not limited thereto. For example, various other communication signals (e.g., UWB communication signals) in addition to the above-mentioned signal may be used for the method in which the wearable electronic device 201 performs clustering based on communication signal information. In particular, any communication signal from which information can be extracted to assist with identifying a zone within the designated space in which the wearable electronic device 201 is located may be used.

According to an embodiment, in operation 313, the electronic device 202 may transmit information on the first zone to the wearable electronic device 201.

According to an embodiment, in operation 315, the wearable electronic device 201 may identify a zone in the designated space where the wearable electronic device 201 is located, based on information on the first zone.

According to an embodiment, in operation 317, the wearable electronic device 201 may transmit activity information indicating a user's activity related to the first zone to the electronic device 202. For example, the wearable electronic device 201 may transmit information on an activity (e.g., walking, running, stretching, sleeping, brushing teeth, washing hands, flushing the toilet, eating, typing on a keyboard, studying or working, and reading) performed by the user in the first zone to the electronic device 202.

According to an embodiment, in operation 319, the electronic device 202 may determine augmented reality information or other functions according to the user pattern (e.g., a usage pattern for the VST device 204), based on the activity information and the information on the first zone. In addition, the electronic device 202 may generate a command such that the VST device 204 displays the determined augmented reality information and/or executes the other functions.

According to an embodiment, in operation 321, the electronic device 202 may transmit the generated command to the VST device 204.

According to an embodiment, in operation 323, the VST device 204 may display augmented reality information, based on the command. Alternatively or additionally, the VST device 204 may perform a specific function, based on the command.

The time interval difference between the operations of FIG. 3 may vary. For example, the subsequent operations may be performed as soon as possible after the preceding operation or there may be a predetermined minimum interval. In one example, after operation 302 to operation 313, operation 315 may be performed after a predetermined time elapses.

Although the operations of FIG. 3 are have been described and illustrated in a particular order, their ordering may vary and the location at which the operations are performed may vary. For example, clustering/zone identification may be performed before the identification of the user's activity, or the identification of the zone in which the wearable electronic device 201 is located may be performed by the electronic device 202. Furthermore, one or more of the operations of FIG. 3 may be omitted or combined in some implementations. For example, operation 303 may be omitted in operation 301 is performed by the wearable electronic device 201.

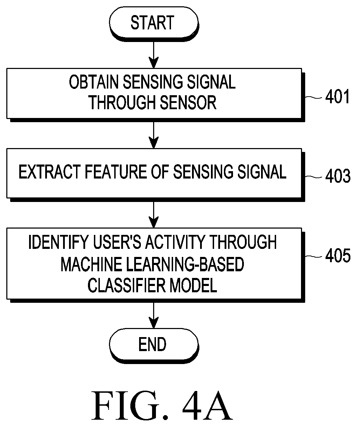

FIG. 4A is a flowchart illustrating an operation of checking user's activity by a wearable electronic device according to an example of the present disclosure.

Referring to FIG. 4A, according to an embodiment, in operation 401, the wearable electronic device 201 may obtain a sensing signal through the sensor 211. The sensor 211 may be a single sensor or may include multiple sensors that each sense different values. Accordingly, a single sensing signal or multiple sensing signals may be obtained and used to identify a user's activity.

According to an embodiment, in operation 403, the wearable electronic device 201 may extract a feature of the sensing signal(s).

According to an embodiment, in operation 405, the wearable electronic device 201 may identify the user's activity through a machine learning-based classifier model. For example, the wearable electronic device 201 may execute a machine learning-based classifier model. The wearable electronic device 201 may input the sensing signal or a feature extracted therefrom as an input value of the machine learning-based classifier model. The wearable electronic device 201 may obtain activity information as an output value of a machine learning-based classifier model.

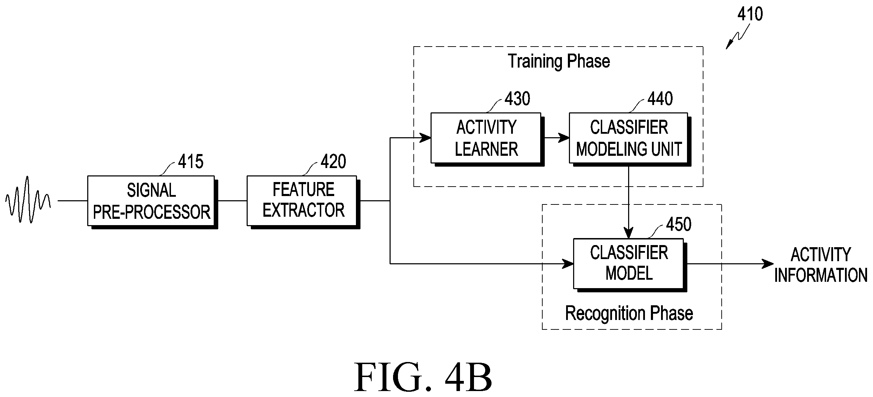

An operation of the wearable electronic device 201 identifying user's activity through the machine learning-based classifier model will be described in detail with reference to FIG. 4B below.

FIG. 4B illustrates a machine learning-based classifier model used to identify user's activity by a wearable electronic device according to an example of the present disclosure.

Referring to FIG. 4B, the machine learning-based classifier model 410 may be a software module executed by the processor 212 or a hardware module including an electrical circuit. For example, the machine learning-based classifier model 410 may include at least some or all of a signal pre-processor (signal pre-processing) 415, a feature extractor (feature extraction) 420, an activity trainer 430, and a classifier modeling unit 440, and a classifier model 450. According to an embodiment, the signal pre-processor 415, the feature extractor 420, the activity trainer 430, the classifier modeling unit 440, and the classifier model 450 may be a software program executed by the processor 212 or a hardware module including an electrical circuit.

The signal pre-processor 415 according to an embodiment may obtain sensor data by performing pre-processing on the sensing signal acquired by the sensor 211. For example, the signal pre-processor 415 may acquire acceleration and gyro sensor data from the sensing signal sensed through the sensor 211, correct a sensor axis, and perform filtering to remove noise.

The feature extractor 420 according to an embodiment may extract feature information from data obtained from sensors, such as an inertial sensor, an air pressure sensor, an HR sensor, and a sound sensor. For example, hand posture information, frequency characteristic information of hand motion, and size and direction information of hand motion may be obtained from acceleration and gyro sensor data.

The activity trainer/learner 430 according to an embodiment may train an activity (or activity pattern) through a machine learning technique, based on the extracted feature information.

The classifier modeling unit 440 according to an embodiment may perform modeling with respect to a classifier that classifies activities by type, based on an activity training result, and may obtain and provide classifier model (e.g., the classifier model 450).

The classifier model 450 according to an embodiment may identify an activity corresponding to the feature information extracted based on the feature information extracted from the feature extractor 420. For example, the classifier model 450 may identify whether an extracted feature information corresponds to a specific activity (e.g., brushing teeth) or whether the extracted feature information corresponds to an activity (e.g., keyboard typing) other than the specific activity.

According to an embodiment, the operations of the feature extractor 420 and the activity trainer 430 may be pre-trained operations (or training phase) and may be thus performed by an external electronic device (e.g., the electronic device 202) or an external server rather than the processor 212 of the wearable electronic device 201. When operations of the feature extractor 420 and the activity trainer 430 are externally performed, a pre-trained training result may be provided to the wearable electronic device 201. The wearable electronic device 201 may perform recognition (recognition phase) using the pre-trained training result and the classifier model 450. The wearable electronic device 201 may output identified activity information, as the result of performing the recognition. In other words, the training of the models used by the wearable electronic device 201 to identify activities may be not performed by the wearable electronic device 201 but instead the models were trained before being provided to the wearable electronic device 201.

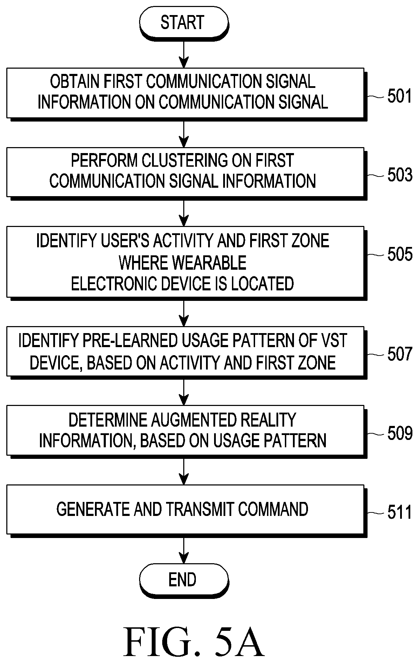

FIG. 5A is a flowchart illustrating an operation of controlling a VST device by an electronic device according to an example of the present disclosure.

Referring to FIG. 5A, according to an embodiment, in operation 501, the electronic device 202 may obtain first communication signal information on a communication signal, received by the wearable electronic device 201, from the wearable electronic device 201.

According to an embodiment, in operation 503, the electronic device 202 may perform clustering on the first communication signal information. For example, the electronic device 202 may perform clustering to identify a clustered zone corresponding to the first communication signal information among a plurality of zones included in a designated space. The electronic device 202 may transmit information on the clustered zones or clustered zone the wearable electronic device 201 is in to the wearable electronic device 201.

According to an embodiment, in operation 505, the electronic device 202 may identify user's activity and a first zone where the wearable electronic device 201 is located. For example, the electronic device 202 may receive information on the user's activity and information on the first zone from the wearable electronic device 201.

According to an embodiment, in operation 507, the electronic device 202 may identify a pre-trained usage pattern of VST device 204, based on the activity and the first zone. In operation 509, the electronic device 202 may determine augmented reality information to be displayed through the display 290 by the VST device 204, based on the usage pattern. For example, the augmented reality information may include information on a virtual background screen and/or virtual information on a partial area. Alternatively, the electronic device 202 may determine a specific function to be executed by the VST device 204, based on the usage pattern.

According to an embodiment, in operation 511, the electronic device 202 may generate a command such that the VST device 204 displays the determined augmented reality information or executes a specific function, and transmit the generated command to the VST device. For example, when the identified user's activity is brushing teeth and the first zone is a bathroom, the electronic device 202 may transmit a command to the VST device 204 such that the VST device 204 displays virtual reality or augmented reality tooth brushing guide information. The VST device 204 may display virtual reality or augmented reality tooth brushing guide information, based on the received command.

Although the operations of FIG. 5A have been described as being performed in a specific order, their order may be changed and also some operations omitted and/or combined.

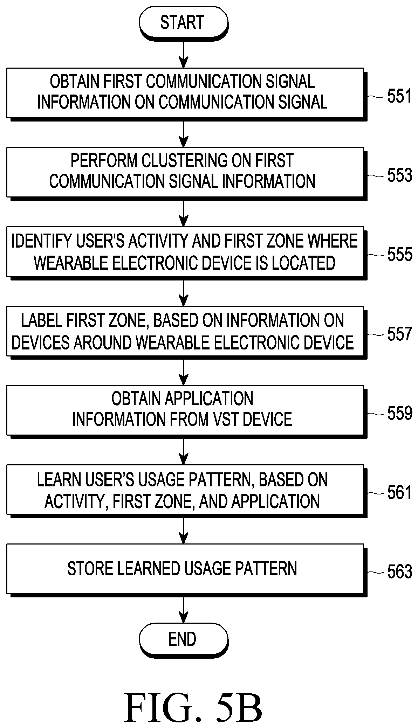

FIG. 5B is a flowchart illustrating an operation of an electronic device training the user's usage pattern of a VST device according to an example of the present disclosure.

Referring to FIG. 5B, according to an embodiment, in operation 551, the electronic device 202 may obtain first communication signal information on a communication signal, received by the wearable electronic device 201, from the wearable electronic device 201.

According to an embodiment, in operation 553, the electronic device 202 may perform clustering on the first communication signal information. For example, the electronic device 202 may perform clustering to identify a clustered zone corresponding to the first communication signal information among a plurality of zones included in a designated space. The electronic device 202 may transmit information on the clustered zones to the wearable electronic device 201.

According to an embodiment, in operation 555, the electronic device 202 may identify user's activity and a first zone where the wearable electronic device 201 is located. For example, the electronic device 202 may receive information on the user's activity and information on the first zone (if not already known) from the wearable electronic device 201.

According to an embodiment, in operation 557, the electronic device 202 may label the first zone, based on information on devices around the wearable electronic device 201. For example, the labeling may refer to an operation of assigning the user's meaning to the first zone. For example, the labeling may refer to an operation of designating a name or title of the first zone and an operation of storing and managing related information between the first zone and peripheral devices together. In one example, a zone may be designated as a lounge on the basis of a TV being in the zone, or a zone may be designated as a bathroom on the basis of a toothbrush being in the zone.

According to an embodiment, in operation 559, the electronic device 202 may obtain information of an application, executed by the VST device 204, from the VST device 204. In addition, the electronic device 202 may also obtain information on a configuration value, configured by the VST device 204, from the VST device 204.

According to an embodiment, in operation 561, the electronic device 202 may train the user's usage pattern (or behavior pattern), based on the user's activity, the first zone where the wearable electronic device 201 is located, and the application executed by the VST device 204.

According to an embodiment, in operation 563, the electronic device 202 may store the trained usage pattern in the memory 230. Thereafter, the electronic device 202 may control the VST device 204 by using the pre-trained usage pattern. For example, if a same or similar activity is detected in a same or similar zone as for a stored usage pattern, the stored usage pattern may be used to control the VST device 204.

Although the operations of FIG. 5B have been described as being performed in a specific order, their order may be changed and also some operations omitted and/or combined.

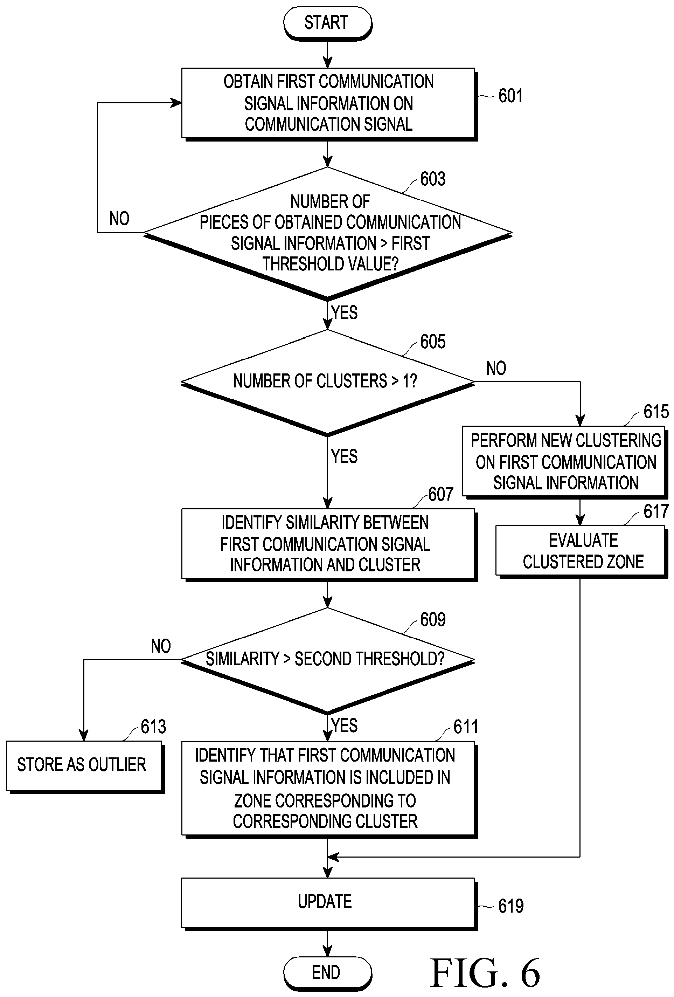

FIG. 6 is a flowchart illustrating an operation of performing clustering by an electronic device according to an example of the present disclosure.

Referring to FIG. 6, according to an embodiment, in operation 601, the electronic device 202 may obtain first communication signal information on a communication signal, received by the wearable electronic device 201, from the wearable electronic device 201. The electronic device 202 may count the number of pieces of communication signal information obtained during a specified period, including the first communication signal information, such that the electronic device 202 may obtain information on more than one communication signal.

According to an embodiment, in operation 603, the electronic device 202 may identify whether the number of pieces of communication signal information obtained during the specified period is greater than a first threshold value. For example, the electronic device 202 may identify whether the number of pieces of communication signal information accumulated during the specified period, including the first communication signal information, is greater than the first threshold value. For example, the first threshold value may be a value indicating the number sufficient to perform clustering on communication signal information. For example, the first threshold value may be automatically determined by the processor 220 or determined by the user.

According to an embodiment, when the number of pieces of communication signal information acquired during the specified period is not greater than the first threshold value (NO in operation 603), the electronic device 202 may continuously obtain communication signal information until the number pieces of communication signal information is greater than the first threshold value.

According to an embodiment, when the number of pieces of communication signal information obtained during the specified period is greater than the first threshold (YES in operation 603), the electronic device 202 may identify in operation 605 whether the number of pre-generated clusters is greater than one (or whether the preconfigured number of clusters is greater than 1).

According to an embodiment, when the number of pre-generated clusters is greater than one (YES in operation 605), the electronic device 202 may identify the similarity between the first communication signal information and the pre-generated clusters in operation 607. For example, the first communication signal information may indicate the RSSI of a communication signal (e. g, Wi-Fi signal) received by the wearable electronic device 201. Additionally, each of the pre-generated clusters may be a group of RSSI data. The electronic device 202 may identify the similarity between the value indicated by the RSSI included in the first communication signal information among the pre-generated clusters and the representative value of each of the pre-generated clusters.

According to an embodiment, in operation 609, the electronic device 202 may identify whether the similarity between the first communication signal information and the pre-generated clusters is greater than a second threshold. For example, the second threshold may be a value indicating that the first communication signal information is similar to elements (e.g., a plurality of pieces of communication signal information) included in the corresponding cluster. For example, the second threshold value may be automatically determined by the processor 220 or determined by the user. For example, the electronic device 202 may determine the similarity between each of the pre-generated clusters and the RSSI included in the first communication signal information, and identify a cluster with a similarity greater than the second threshold among the pre-generated clusters.

According to an embodiment, when the similarity is identified to be greater than the second threshold (YES in operation 609), in operation 611, the electronic device 202 may identify that the first communication signal information is included in the zone corresponding to the corresponding cluster. For example, if there are a plurality of clusters with a similarity greater than the second threshold among the preset clusters, the electronic device 202 may identify that the first communication signal information is included in the cluster with a higher similarity. In operation 619, the electronic device 202 may update the corresponding result. For example, the electronic device 202 may update the determination result of the first communication signal information in the pre-generated clusters.

According to an embodiment, when the similarity is identified not to be greater than the second threshold (NO in operation 609), in operation 613, the electronic device 202 may store the first communication signal information as an outlier. For example, when the number of pieces of communication signal information stored as an outlier exceeds a specified number, the electronic device 202 may perform additional clustering on the corresponding communication signal information. The electronic device 202 may also produce an additional cluster for the communication signals stored as an outlier, through the additionally performed clustering.

According to an embodiment, when the number of pre-generated clusters is not greater than one (NO in operation 605), in operation 615, the electronic device 202 may perform clustering to produce a new cluster. For example, the electronic device 202 may perform zone clustering on communication signal information acquired using an unsupervised learning method. For example, the electronic device 202 may produce at least one cluster by performing clustering on a plurality of pieces of accumulated communication signal information including the first communication signal information. In addition, the electronic device 202 may identify a clustered zone corresponding to the first communication signal information.

According to an embodiment, in operation 617, the electronic device 202 may evaluate the clustered zone corresponding to the first communication signal information. In operation 619, the electronic device may update the clustered zone corresponding to the first communication signal information, based on the evaluation result.

Although the operations of FIG. 6 have been described as being performed in a specific order, their order may be changed and also some operations omitted and/or combined. For example, the procedure may be terminated where NO operations are shown instead of subsequent operations being performed. Furthermore the thresholds of FIG. 6 are not limited to those described.

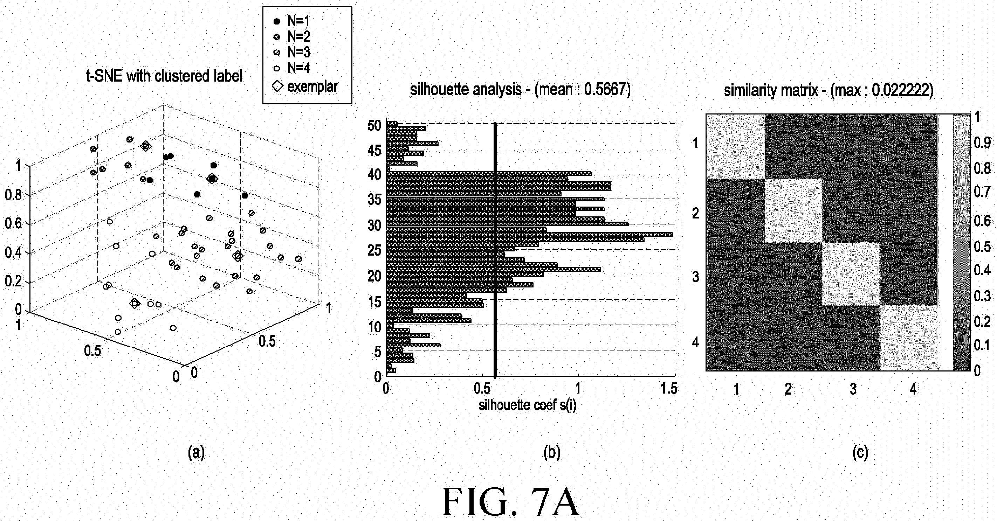

FIG. 7A illustrates operations of performing clustering by an electronic device according to an example of the present disclosure.

Referring to (a) of FIG. 7A, the electronic device 202 may perform zone clustering on communication signal information acquired using an unsupervised learning method. For example, the electronic device 202 may produce at least one cluster by performing clustering on a plurality of pieces of accumulated communication signal information including the first communication signal information. As noted above, the communication signal information may include SSIDs, BSSIDs, RSSI or any other suitable type of information from which relational information can be extracted. For example, as shown in (a) of FIG. 7A, a cluster of elements corresponding to the plurality of pieces of communication signal information may be produced in a 3D space. For example, four clusters may be produced.

Referring to (b) of FIG. 7A, according to an embodiment, the electronic device 202 may perform silhouette analysis on clustered zones as shown in (a) of FIG. 7A.

[Equation 1]

$$P^* = \arg \frac{max}{p} \left( \frac{1}{N} \sum_{i=0}^{n} \frac{b^{(i)} - a^{(i)}}{\max \left( a^{(i)}, b^{(i)} \right)} \right)$$

Referring to (b) of FIG. 7A, the electronic device 202 may perform silhouette analysis on the plurality of pieces of communication signal information including first communication signal information, based on Equation 1. For example, one piece of communication signal information may correspond to one element.

Here, a(i) may indicate the mean of distances between a specific element in a (i-th) cluster and all elements included in the corresponding cluster. b(i) may indicate the mean of distances between the specific element in the (i-th) cluster and all elements not included in the corresponding cluster. b(i)-a(i) may indicate the degree of separation of the cluster. The electronic device 202 may divide the corresponding value by max (b(i)-a(i)) to normalize the silhouette calculation result. Here, max (b(i)-a(i)) may indicate the maximum value of b(i)-a(i). N may indicate the number of all elements.

According to an embodiment, the electronic device 202 may obtain a mean value of silhouette calculation results for all elements by using Equation 1, and repeatedly perform clustering and evaluation so that the obtained mean value has the maximum value. For example, the mean value of the silhouette calculation results may be 0.5667 indicated by a center line. For example, s(i) representing a silhouette coefficient may be determined by the processor 220.

Referring to (c) of FIG. 7A, according to an embodiment, the electronic device 202 may perform cluster similarity analysis on clustered zones as shown in (a) of FIG. 7A. For example, a method using cosine similarity or a method using Pearson's correlation coefficient may be applied to a method for analyzing cluster similarity. For example, as shown in (c) of FIG. 7A, zones (1,1), (2,2), (3,3), and (4,4) in the matrix of (c) of FIG. 7A may be displayed to be clearly distinguished from other zones. When zones (1,1), (2,2), (3,3), and (4,4) are clearly distinguished from other zones, the similarity between the zones may be low. That is, the electronic device 202 may identify that the clustered zones are properly classified through the matrix of (c) of FIG. 7A.

According to an embodiment, the electronic device 202 may update silhouette analysis and/or similarity analysis results for the clustered zones.

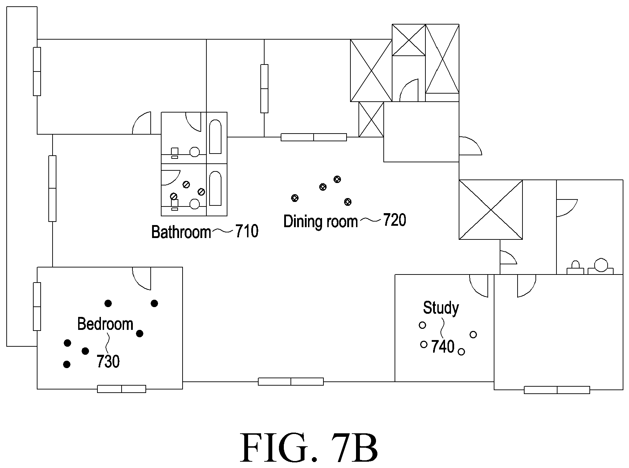

FIG. 7B illustrates clustered zones in a designated space according to an example of the present disclosure.

Referring to FIG. 7B, according to an embodiment, the electronic device 201 may classify the designated space into a plurality of clustered zones, based on a clustering result. Based on the clustering result, the electronic device 201 may classify the designated space into a bathroom 710, a dining room 720, a bedroom 730, and a study 740.

According to an embodiment, the electronic device 201 may identify the clustered zone corresponding to the first communication signal information as one of the bathroom 710, the dining room 720, the bedroom 730, and the study 740. The electronic device 201 may transmit information on the clustered zone to the wearable electronic device 201.

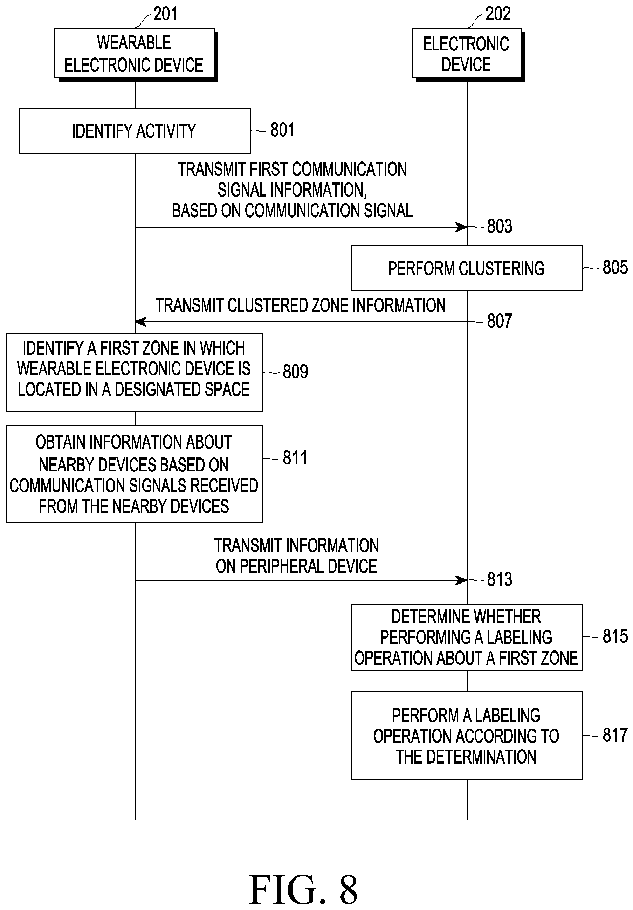

FIG. 8 illustrates an operation of labeling at least one zone included in a designated space by an electronic device according to an example of the present disclosure.

Referring to FIG. 8, according to an embodiment, in operation 801, the wearable electronic device 201 may identify the user's activity sensed through the sensor 211.

According to an embodiment, in operation 803, the wearable electronic device 201 may transmit first communication signal information, based on the communication signal received from an access point, to the electronic device 202.

According to an embodiment, in operation 805, the electronic device 202 may perform clustering on the first communication signal information. The electronic device 202 may identify a clustered zone corresponding to the first communication signal information, based on the clustering result.

According to an embodiment, in operation 807, the electronic device 202 may transmit information on the clustered zone to the wearable electronic device 201.

According to an embodiment, in operation 809, the wearable electronic device 201 may identify a first zone in a designated space, based on the clustered zone. For example, the wearable electronic device 201 may determine or identify that the wearable electronic device has entered or is present in the first zone in the designated space.

According to an embodiment, in operation 811, the wearable electronic device 201 may acquire information on devices (hereinafter referred to as peripheral devices) around the wearable electronic device 201 in the first zone. For example, the wearable electronic device 201 may acquire a communication signal from a peripheral device (e.g., a device capable of performing a communication function) through the communication module 218. The wearable electronic device 201 may obtain information on a peripheral device from a communication signal. For example, when information on a peripheral device is pre-stored, the wearable electronic device 201 may analyze a communication signal and update the information on the peripheral device. For example, updating may be performed periodically or non-periodically. For example, the information obtained from the peripheral device may include address information (e.g., BSSID or MAC address) of the corresponding device, communication signal strength information (e.g., RSSI), and/or information on the distance between the wearable electronic device 201 and the peripheral device. For example, the wearable electronic device 201 may search for home appliances around the wearable electronic device 201 through a wireless communication technology (e.g., BLE, UWB, Wi-Fi), and calculate the distance between the wearable electronic device 201 and the home appliance. The wearable electronic device 201 may classify home appliances as a movable appliance (e.g., a movable device) and a non-movable appliance (e.g., a stationary devices) via appliance type information and the home appliances accordingly. For example, the wearable electronic device 201 may classify an air purifier or a robot cleaner as a movable device and classify a refrigerator or a TV as a stationary device that rarely moves.

According to an embodiment, in operation 813, the wearable electronic device 201 may transmit information on a peripheral device to the electronic device 202. For example, the wearable electronic device 201 may transmit information about nearby devices to the electronic device 202 at a designated period. For example, the wearable electronic device 201 may transmit information about nearby devices to the electronic device 202 along with transmitting activity information about the first zone. Alternatively, the wearable electronic device 201 may transmit information about nearby devices to the electronic device 202 at a designated period separately from transmitting activity information about the first zone.

According to an embodiment, in operation 815, the electronic device 202 may determine whether performing a labeling operation for the first zone by using information on the peripheral device.

According to an embodiment, the electronic device 202 may adjust a parameter related to labeling time for performing the labeling operation, based on information on the peripheral device.. For example, the electronic device 202 may adjust a parameter according to a weight for a peripheral device. For example, the electronic device 202 may determine a weight according to a distance between the wearable electronic device 201 and a peripheral device and/or the type of the peripheral device.

According to an embodiment, the electronic device 202 may determine a labeling time. For example, the electronic device 202 can adjust parameters that determine the labeling time using Equation 2.

In operation 817, when the labeling time is identified to have arrived, the electronic device 202 may perform labeling on at least one zone clustered with respect to the designated space. For example, the electronic device 202 may perform the labeling operation on a zone corresponding to a newly added cluster. Alternatively, the electronic device 202 may perform an operation of updating labeling for pre-generated clusters. For example, the electronic device 202 may perform the labeling operation on at least one zone clustered in the designated space separately or in parallel with the operation of controlling the VST device 204.

[Equation 2]

$$\theta = \gamma \cdot \theta_{i-1} + (1 - \gamma) \cdot P \begin{cases} \text{if } \nexists(A \cap A'_{activity}) \| \nexists(A \cap A'_{appliance)}, \gamma=1 \\ \text{elif } \dfrac{\min(W)}{1 \leq i \leq n} \leq \text{thrd}, P = -a \cdot w_i \\ \text{else}, P = \beta \cdot C_{Zone\_Labeling} \end{cases}$$

Here, $\theta$ may indicate a parameter for performing zone labeling. For example, $\theta$ may indicate a threshold parameter for the accumulated number of data for determining a labeling execution time. A may indicate previously collected zone information, A' may indicate currently additionally collected information (activity information and peripheral device information), W may indicate a weight vector for peripheral devices belonging to the corresponding zone, and C may indicate information for calibrating $\theta$. W may indicate a set including $w_i$ (i is a natural number), which is a weight of each of the peripheral devices (e.g., W= [w1(refrigerator)=0.3, w2(washing machine)=0.1, ...]).

According to an embodiment, the electronic device 202 may determine that $\gamma$ is equal to 1 when newly collected information (activity information and peripheral device information) has not been previously collected. That is, the electronic device 202 may maintain $\theta$ value as a previously calculated value.

The electronic device 202 may determine $\gamma$ as a specified constant other than 1 when newly collected information (activity information and peripheral device information) has been previously collected. At this time, a parameter for determining a labeling time may be adjusted. For example, the weight $w_i$ may increase in proportional to the number of times a peripheral device has been searched for in the corresponding zone, and the weight $w_i$ may decrease when the peripheral device is moved to another zone and is not searched in the previous location. When the weight $w_i$ is less than or equal to a predetermined threshold, the weight $w_i$ may become smaller than the previous $\theta$ value by applying $-\alpha$ to the weight $w_i$. Alternatively, when the weight $w_i$ is not equal to or less than the predetermined threshold value, the weight $w_i$ may become greater than the previous $\theta$ value by applying $\beta$ to $w_i$. That is, when the $\theta$ value is large, the electronic device 202 may adjust the parameter such that labeling is newly performed only when the accumulated number of data is large, and when the $\theta$ value is small, the electronic device 202 may adjust the parameter such that labeling is newly performed even when the accumulated data number is small.

According to an embodiment, the electronic device 202 may determine a labeling time, based on the adjusted parameter.

Although the operations of FIG. 8 have been described as being performed in a specific order and at specific devices, their order and location may be changed and also some operations omitted and/or combined.

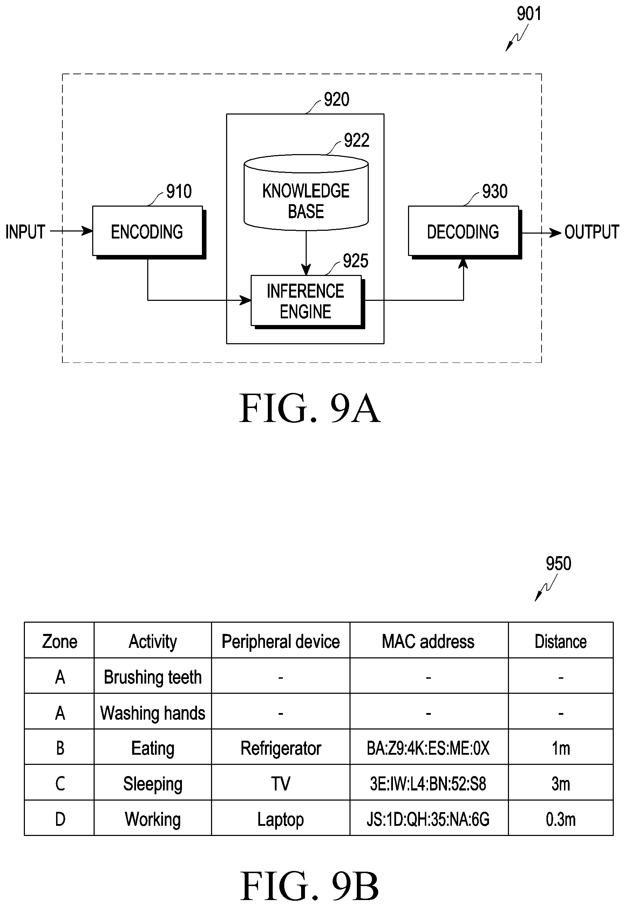

FIG. 9A is a block diagram of an inference model through which an electronic device performs labeling on at least one zone included in a designated space according to an example of the present disclosure.

Referring to FIG. 9A, according to an embodiment, the electronic device 202 may execute an inference model 901 to perform labeling on at least one zone included in a designated space.

According to an embodiment, the inference model 901 may include an encoding unit 910, an inference unit 920, and a decoding unit 930. For example, the inference unit 920 may include a knowledge base 922 and an inference engine 925.

According to an embodiment, the electronic device 202 may input the user's activity and information of a peripheral device to the inference model 901 as an input value. The encoding unit 910 may encode the input value to conform to the rules of the inference engine 925 and provide the encoded value to the inference engine 925 of the inference unit 920.

According to an embodiment, the inference engine 925 may be modeled based on the knowledge base 922. Alternatively, the inference engine 925 may be modeled based on deep learning. The inference engine 925 may numerically obtain an evaluation result of the premise by applying the encoded input value to the premise of the rule. The output engine 925 may unify the numerically obtained evaluation results and output the unified evaluation result to the decoding unit 930. The decoding unit 930 may decode the unified evaluation result and output decoded evaluation result as an inference result.

According to an embodiment, an input value of the inference model 901 may include activity, a peripheral device, and the distance between the wearable electronic device 201 and a peripheral device. For example, the input value of the inference model 901 may be implemented as X wherein X = {activity (a), peripheral device (b), distance (c)}.

According to an embodiment, an output value of the inference model 901 may include a name of a zone included in the designated space. For example, the output value of the inference model 901 may be implemented as Y wherein Y = {toilet (A), dining room (B), bedroom (C), study (D), ..., unknown (Z)}.

Meanwhile, the inference result output by the inference model 901 will be exemplarily described in FIG. 9B.

FIG. 9B is a table showing a result of labeling at least one zone included in a designated space by an electronic device according to an example of the present disclosure.

Referring to FIG. 9B, the electronic device 202 may label a first zone where the wearable electronic device 201 is located, through an inference model 901.

According to an embodiment, when the input value X of the inference model 901 is {activity (brushing teeth), peripheral device (none), distance (none)}, the output value Y of the inference model 901 may be {toilet (A)}. When the input value X of the inference model 901 is {activity (washing hands), peripheral device (none), distance (none)}, the output value Y of the inference model 901 may be {toilet (A)}. When the input value X of the inference model 901 is {activity (eating), peripheral device (refrigerator), distance (1m)}, the output value Y of the inference model 901 may be {dining room (B)}. When the input value X of the inference model 901 is {activity (sleeping), peripheral device (TV), distance (3m)}, the output value Y of the inference model 901 may be {bedroom (C)}. When the input value X of the inference model 901 is {activity (working (or typing on a keyboard)), peripheral device (laptop), distance (0.3m)}, the output value Y of the inference model 901 may be {library (D)}.

Referring to FIG. 9B, according to an embodiment, the electronic device 202 may determine the name of the first zone as a bathroom, dining room, bedroom, or study. The electronic device 202 may store and manage information on peripheral devices (type, number, and distance of peripheral devices) of the first zone along with the name of the first zone.

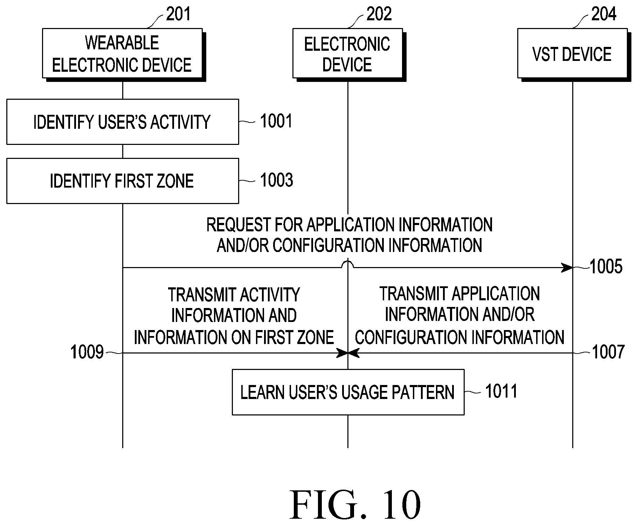

FIG. 10 is a flowchart illustrating an operation of an electronic device training the user's usage pattern of a VST device according to an example of the present disclosure.

Referring to FIG. 10, according to an embodiment, in operation 1001, the wearable electronic device 201 may identify the user's activity.

According to an embodiment, in operation 1003, the wearable electronic device 201 may identify a first zone where the wearable electronic device 201 is located.

According to an embodiment, in operation 1005, the wearable electronic device 201 may request transmission of application information and configuration information to the VST device 204.

According to an embodiment, in operation 1007, the VST device 204 may transmit application information and/or configuration information executed by the VST device 204 to the electronic device 202, according to the request from the wearable electronic device 201.

According to an embodiment, in operation 1009, the wearable electronic device 201 may transmit activity information and information on the first zone to the electronic device 202.

According to an embodiment, in operation 1011, the electronic device 201 may train the user's usage pattern (or behavior pattern) of the VST device 204 by using activity information, information on the first zone, and application information and/or configuration information of the VST device 204. For example, the electronic device 201 may train a specific application or specific function executed by the VST device 204 while the user is performing specific activity in the first zone. Alternatively, the electronic device 201 may train a configuration value configured in the VST device 204 while the user is performing specific activity in the first zone. Thereafter, the electronic device 201 may control the VST device 204, based on the pre-trained usage pattern of the VST device 204, as described above.

Although the operations of FIG. 10 have been described as being performed in a specific order and at specific devices, their order and location may be changed and also some operations omitted and/or combined.

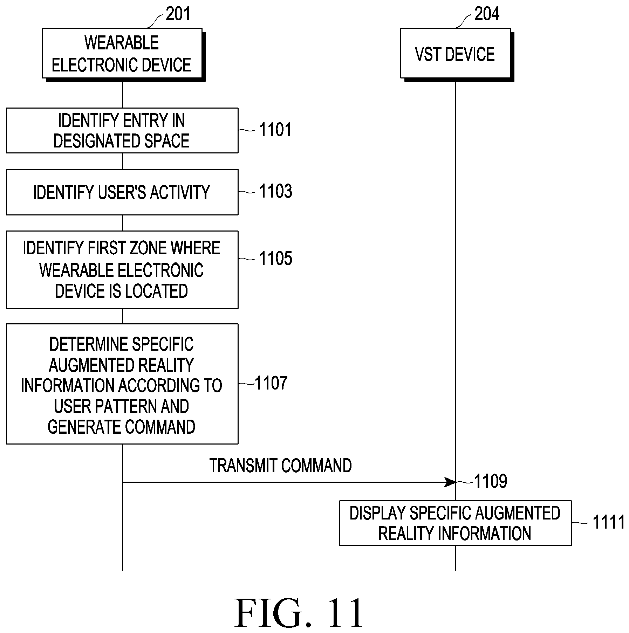

FIG. 11 illustrates an operation of controlling a VST device by a wearable electronic device according to an example of the present invention.

Referring to FIG. 11, according to an embodiment, the wearable electronic device 201 may control the VST device 204 without the electronic device 202. In this case, the wearable electronic device 201 may perform at least some of the operations performed by the electronic device 202 described above.

According to an embodiment, in operation 1101, the wearable electronic device 201 may identify entry in a designated space, through a GPS module (not shown).

According to an embodiment, in operation 1103, when identifying that the wearable electronic device 201 has entered the designated space, the wearable electronic device 201 may identify user's activity through the sensor 211.

According to an embodiment, in operation 1105, the wearable electronic device 201 may identify a first zone in a designated space where the wearable electronic device 201 is located. For example, when user activity information is identified, the wearable electronic device 201 may receive a communication signal from an access point located within the designated space through the communication module 218. The wearable electronic device 201 may obtain first communication signal information on the communication signal. The wearable electronic device 201 may identify a clustered zone corresponding to the first communication signal information by performing clustering on the first communication signal information. The wearable electronic device 201 may identify a first zone where the wearable electronic device 201 is located, among a plurality of zones included in the designated space, based on the clustered zones.

According to an embodiment, in operation 1107, the wearable electronic device 201 may determine specific augmented reality information (e.g., a specific function) according to the user pattern (e.g., a usage pattern of the VST device 204), based on the user's activity and the first zone. In addition, in operation 1107, the wearable electronic device 201 may generate a command such that the VST device 204 displays the specific augmented reality information (or executes the specific function).

According to an embodiment, in operation 1109, the wearable electronic device 201 may transmit a command to the VST device 204. In operation 1111, the VST device 204 may display specific augmented reality information (or execute a specific function), based on the received command.

Although the operations of FIG. 11 have been described as being performed in a specific order and at specific devices, their order and location may be changed and also some operations omitted and/or combined.

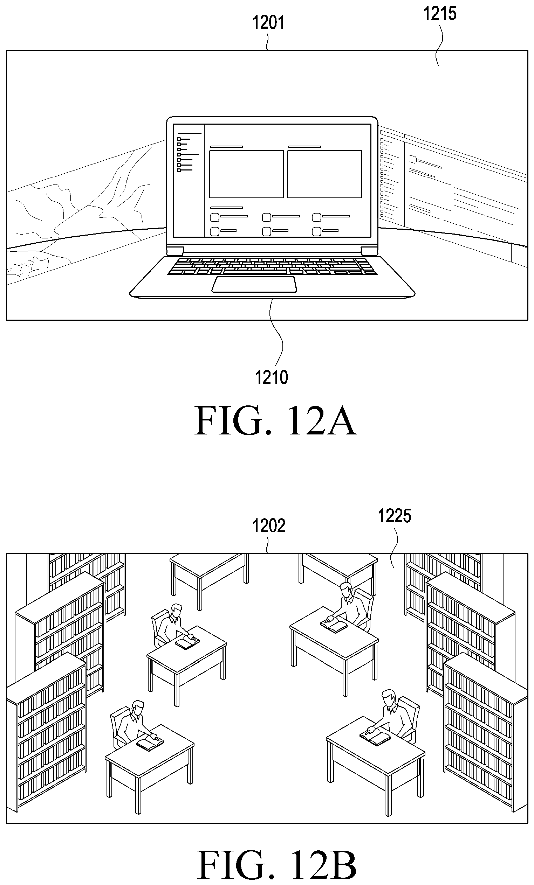

FIGS. 12A to 12D illustrate an operation of displaying augmented reality information by a VST device according to an example of the present disclosure.

Referring to FIGS. 12A to 12D, according to an embodiment, the wearable electronic device 201 and the VST device 204 may be in a state in which they are worn by the user.

Referring to FIG. 12A, according to an embodiment, the wearable electronic device 201 may sense user's typing on a keyboard of a laptop computer 1210 and detect or identify the user's activity as keyboard typing. The wearable electronic device 201 may identify that the user or the wearable electronic device 201 has entered or is present in the study. In addition, the wearable electronic device 201 may obtain information on the laptop computer 1210.

According to an embodiment, the electronic device 201 may receive information on keyboard typing and information on a library from the wearable electronic device 201. Based on the received information, the electronic device 201 may identify a pre-trained usage pattern of the user's VST device 204. For example, the electronic device 202 may pre-train a pattern in which a specific augmented reality screen (e.g., a virtual extended display screen) is displayed on the VST device 204 when the user works using the laptop 1210 in the study. The electronic device 201 may transmit a command for displaying a specific augmented reality screen to the VST device 204, based on a pre-trained usage pattern.

According to an embodiment, the VST device 204 may display a first screen 1201 based on the image captured by the camera 275 on the display 290. The VST device 204 may display a specific augmented reality screen 1215 on the first screen 1201. Alternatively, the VST device 204 may recommend the user to display the specific augmented reality screen 1215. The VST device 204 may display the specific augmented reality screen 1215 on the first screen 1201, based on the user input for the corresponding recommendation.

Referring to FIG. 12B, according to an embodiment, the wearable electronic device 201 may sense walking performed by the user to determine or identify the user's activity as walking. The wearable electronic device 201 may identify that the user or the wearable electronic device 201 has entered or is present in a study.

According to an embodiment, the electronic device 201 may receive walking information and library information from the wearable electronic device 201. Based on the received information, the electronic device 201 may identify a pre-trained usage pattern of the user's VST device 204. For example, the electronic device 202 may pre-train a pattern in which a specific augmented reality screen (e.g., a famous global library background screen) is displayed on the VST device 204 after the user enters the study. The electronic device 201 may transmit a command for displaying a specific augmented reality screen to the VST device 204, based on the pre-trained usage pattern.

According to an embodiment, the VST device 204 may display a second screen 1202 based on the image captured by the camera 275 on the display 290. The VST device 204 may display a specific augmented reality screen 1225 on the second screen 1202. Alternatively, the VST device 204 may recommend the user to display the specific augmented reality screen 1225. The VST device 204 may display the specific augmented reality screen 1225 on the second screen 1202, based on the user input for the corresponding recommendation.

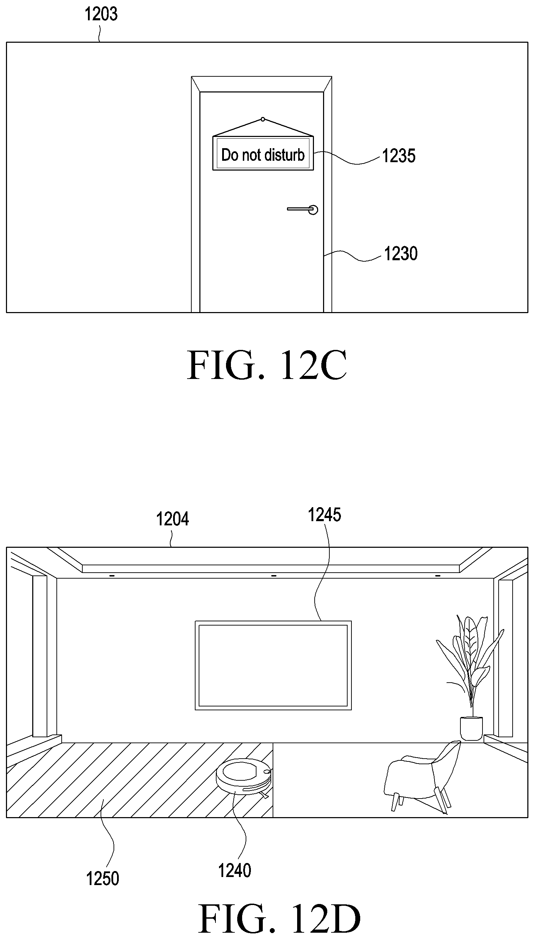

Referring to FIG. 12C, according to an embodiment, the VST device 204 may display augmented reality information by further considering information received from another external electronic device (or a wearable electronic device).

According to an embodiment, the VST device 204 may receive information from the user's electronic device in a room. At this time, the user's electronic device in the room may transmit the corresponding information to the VST device 204 according to the user's request. Alternatively, the user's electronic device in the room may sense the user's activity (e.g., exercising working, studying, sleeping) and automatically transmit the corresponding information to the VST device 204. For example, the VST device 204 may display augmented reality information 1235 that may be disturbed on a room door 1230 included in a third screen 1203 based on the image captured through the camera 274. Alternatively, the VST device 204 may display an image representing emotion information on the room door 1230.

Referring to FIG. 12D, according to an embodiment, the wearable electronic device 201 may identify that the user or the wearable electronic device 201 has entered a living room included in the designated space. The wearable electronic device 201 may acquire information on the robot cleaner 1240 and the TV 1245 in the vicinity thereof. The VST device 204 may display a fourth screen 1204 for the living room zone, based on the image captured through the camera 275.

According to an embodiment, the VST device 204 may display augmented reality information, based on information received from the robot cleaner 1240. For example, information on the robot cleaner 1240 may be directly transmitted to the VST device 204 or may be transmitted to the VST device 204 through the wearable electronic device 201 or the electronic device 202. For example, an area 1250 in a specific zone, cleaned by the robot cleaner, may be displayed as augmented reality information. The VST device 204 may display an interface for controlling the robot cleaner. Based on the user's input on the interface displayed on the VST device 204, the VST device 204 may control the robot cleaner to resume cleaning an area in the specific zone, which has not been yet cleaned.

According to an embodiment, the electronic device 202 may control the robot cleaner 1240 to prevent the robot cleaner 1240 from entering a specific zone, based on the user's activity and the first zone acquired through the wearable electronic device 201. At this time, the electronic device 202 may transmit a command to the VST device 204 such that a guide informing that the robot cleaner 1240 is not allowed to enter the specific zone is displayed on the VST device 204. **In** addition, the electronic device 202 may further obtain information on the user's state from the VST device 204 and control the robot cleaner, based on the obtained information. For example, the electronic device 202 may control the robot cleaner 1240 such that the robot cleaner 1240 resumes cleaning the specific zone according to the user's activity and the user's state.

The electronic device 202 according to an embodiment may include a GPS module 240, a communication module 250, a memory 230, and a processor 220. The processor according to an embodiment may be configured to identify, using the GPS module, that the electronic device has entered a designated space The processor according to an embodiment may be configured to receive first communication signal information on a communication signal received by a wearable electronic device, from the wearable electronic device 201 through the communication module. The processor according to an embodiment may be configured to identify a first zone in which the wearable electronic device is located, among a plurality of zones included in the designated space by performing clustering on the first communication signal information. According to an embodiment, the processor may be configured to transmit information on the first zone to the wearable electronic device through the communication module. The processor according to an embodiment may be configured to, based on transmitting the information on the first zone, obtain information on first activity of a user related to the first zone from the wearable electronic device through the communication module. According to an embodiment, the processor may be configured to obtain a first command for controlling a head mounted display (HMD) device 204, based on the first activity information and the information on the first zone. The processor according to an embodiment may be configured to transmit the first command to the HMD device through the communication module.

According to an embodiment, the processor may be configured to obtain the first command for displaying augmented reality information in the HMD device (204), based on the first activity and the first zone.

According to an embodiment, the processor may be configured to identify a pre-trained usage pattern of the HMD device, based on the first activity and the first zone.

According to an embodiment, the processor may be configured to determine the first command, based on the pre-trained usage pattern.

According to an embodiment, the processor may be configured to identify the first zone by comparing the first communication signal information with a plurality of pieces of communication signal information stored in the memory.

According to an embodiment, the processor may be configured to, based on identifying that a similarity between the first communication signal information and one cluster of one or more clusters obtained by clustering the plurality of pieces of communication signal information is greater than a threshold value, determine a zone corresponding to the one cluster as the first zone.

According to an embodiment, the processor may be configured to store the first communication signal information in the memory. According to an embodiment, the processor may be configured to divide the designated space into one or more zones by clustering the plurality of pieces of communication signal information including the first communication signal information stored in the memory.

According to an embodiment, the processor may be configured to further perform silhouette analysis and/or similarity analysis on the plurality of pieces of clustered communication signal information to determine the one or more zones.

According to an embodiment, the processor may be configured to obtain information on one or more devices located around the wearable electronic device from the wearable electronic device through the communication module. According to an embodiment, the processor may be configured to obtain information on activity of the user, sensed by the wearable electronic device in the one or more zones. According to an embodiment, the processor may be configured to perform labeling on the one or more zones, based on information on the activity and information on the one or more devices.

According to an embodiment, the processor may be configured to, based on identifying that the wearable electronic device identifies that the user is located in the first zone while performing the first activity, obtain information on a first application executed by the HMD device from the HMD device. According to an embodiment, the processor may be configured to train a user's usage pattern of the HMD device, based on the first activity, the first zone, and the first application.

According to an embodiment, the processor may be configured to determine the first command in relation to the first application, based on the first activity and the first zone.

A method for operating the electronic device 202 according to an embodiment may include identifying, using a GPS module 240 included in the electronic device, that the electronic device has entered a designated space. The method for operating the electronic device according to an embodiment may include receiving first communication signal information on a communication signal received by a wearable electronic device, from the wearable electronic device 201 through a communication module 250 included in the electronic device. The method for operating the electronic device according to an embodiment may include identifying a first zone in which the wearable electronic device is located, among a plurality of zones included in the designated space by performing clustering on the first communication signal information. The method for operating the electronic device according to an embodiment may include transmitting information on the first zone to the wearable electronic device through the communication module. The method for operating the electronic device according to an embodiment may include, based on transmitting the information on the first zone, obtaining information on first activity of a user related to the first zone from the wearable electronic device through the communication module. The method for operating the electronic device according to an embodiment may include obtaining a first command for controlling a head mounted display (HMD) device 204, based on the first activity information and the information on the first zone. The method for operating the electronic device according to an embodiment may include transmitting the first command to the HMD device through the communication module.

The obtaining of the first command according to an embodiment may include obtaining the first command for displaying augmented reality information in the HMD device (204), based on the first activity and the first zone.

The obtaining of the first command according to an embodiment may include identifying a pre-trained usage pattern of the HMD device, based on the first activity and the first zone.

The obtaining of the first command according to an embodiment may include determining the first command, based on the pre-trained usage pattern.

The identifying of the first zone according to an embodiment may include identifying the first zone by comparing the first communication signal information with a plurality of pieces of communication signal information stored in the memory.

The identifying of the clustered zone according to an embodiment may include, based on identifying that a similarity between the first communication signal information and one cluster of one or more clusters obtained by clustering the plurality of pieces of communication signal information is greater than a threshold value, determining a zone corresponding to the one cluster as the first zone.

The method for operating the electronic device according to an embodiment may further include storing the first communication signal information in the memory. The method for operating the electronic device according to an embodiment may further include dividing the designated space into one or more zones by clustering the plurality of pieces of communication signal information including the first communication signal information stored in the memory.

The dividing of the designated space into one or more zones according to an embodiment may include further performing silhouette analysis and/or similarity analysis on the plurality of pieces of clustered communication signal information to determine the one or more zones.

The method for operating the electronic device according to an embodiment may further include obtaining information on one or more devices located around the wearable electronic device from the wearable electronic device through the communication module. The method for operating the electronic device according to an embodiment may further include obtaining information on an activity of the user, sensed by the wearable electronic device in the one or more zones. The method for operating the electronic device according to an embodiment may further include performing labeling on the one or more zones, based on information on the activity and information on the one or more devices.

The method for operating the electronic device according to an embodiment may further include, based on identifying that the wearable electronic device identifies that the user is located in the first zone while performing the first activity, obtaining information on a first application executed by the HMD device from the HMD device. The method for operating the electronic device according to an embodiment may further include training a user's usage pattern of the HMD device, based on the first activity, the first zone, and the first application.

The wearable electronic device 201 according to an embodiment may include a sensor 211, a GPS module, a communication module 218, and a processor 212. The processor according to an embodiment may be configured to identify, through the GPS module, that the electronic device has entered a designated space including a plurality of zones. The processor according to an embodiment may be configured to identify activity information of a user through the sensor. The processor according to an embodiment may be configured to obtain first communication signal information on a communication signal received through the communication module in case that the activity information is identified. The processor according to an embodiment may be configured to identify a clustered zone corresponding to the first communication signal information by performing clustering on the first communication signal information. According to an embodiment, the processor may be configured to identify a first zone in which the wearable electronic device is located, among the plurality of zones, based on the clustered zone. According to an embodiment, the processor may be configured to obtain a first command for augmented reality information of a head mounted display (HMD) device 204, based on the activity information and the information on the first zone. The processor according to an embodiment may be configured to transmit the first command to the HMD device through the communication module such that the HMD device displays the augmented reality information through a display 290 of the HMD device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," *"coupled to," "connected with,"* or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (202) comprising:

   a GPS module (240);
   a communication module (250);
   a memory (230); and
   a processor (220),
   wherein the processor is configured to:

   identify, using the GPS module, that the electronic device has entered a designated space;
   receive, through the communication module, from a wearable electronic device (201), first communication signal information on a communication signal received by the wearable electronic device;
   **characterised in that** the processor is further configured to:

   identify a first zone in which the wearable electronic device is located, among a plurality of zones included in the designated space by performing clustering on the first communication signal information;
   transmit, through the communication module, information on the first zone to the wearable electronic device;
   based on transmitting the information on the first zone, obtain, through the communication module, from the wearable electronic device, information on first activity of a user related to the first zone;
   obtain a first command for controlling a head mounted display (HMD) device (204), based on the first activity information and the information on the first zone; and
   transmit, through the communication module, the first command to the HMD device.

2. The electronic device of claim 1, wherein the processor is configured to:
   obtain the first command for displaying augmented reality information in the HMD device (204), based on the first activity and the first zone.

3. The electronic device according to any one of claim 1 to claim 2, wherein the processor is configured to identify a pre-trained usage pattern of the HMD device, based on the first activity and the first zone.

4. The electronic device according to claim 3, wherein the processor is configured to determine the first command based on the pre-trained usage pattern.

5. The electronic device according to any one of claim 1 to claim 4, wherein the processor is configured to identify the first zone by comparing the first communication signal information with a plurality of pieces of communication signal information stored in the memory.

6. The electronic device according to any one of claim 1 to claim 5, wherein the processor is configured to, based on identifying that a similarity between the first communication signal information and one cluster of one or more clusters obtained by clustering the plurality of pieces of communication signal information is greater than a threshold value, determine a zone corresponding to the one cluster as the first zone.

7. The electronic device according to any one of claim 1 to claim 6, wherein the processor is configured to:

    store the first communication signal information in the memory; and
    divide the designated space into one or more zones by clustering the plurality of pieces of communication signal information comprising the first communication signal information stored in the memory.

8. The electronic device according to one of claim 1 to claim 7, wherein the processor is configured to further perform silhouette analysis and/or similarity analysis on the plurality of pieces of clustered communication signal information to determine the one or more zones.

9. The electronic device according to one of claim 1 to claim 8, wherein the processor is configured to:

    obtain information on one or more devices located around the wearable electronic device from the wearable electronic device through the communication module;
    obtain information on an activity of the user, sensed by the wearable electronic device in the one or more zones; and
    perform labeling on the one or more zones, based on information on the activity and information on the one or more devices.

10. The electronic device according to one of claim 1 to claim 9, wherein the processor is configured to:

    based on identifying that the wearable electronic device identifies that the user is located in the first zone while performing the first activity, obtain information on a first application executed by the HMD device from the HMD device; and
    train a usage pattern by the user with respect to the HMD device, based on the first activity, the first zone, and the first application.

11. The electronic device according to claim 10, wherein the processor is configured to determine the first command in relation to the first application, based on the first activity and the first zone.

12. A method for operating an electronic device (202), the method comprising:

    identifying, using a GPS module (240) included in the electronic device, that the electronic device has entered a designated space;
    receiving, through a communication module (250) included in the electronic device, from a wearable electronic device (201), first communication signal information on a communication signal received by the wearable electronic device;
    **characterized by**:

        identifying a first zone in which the wearable electronic device is located, among a plurality of zones included in the designated space by performing clustering on the first communication signal information;
        transmitting, through the communication module, information on the first zone to the wearable electronic device;
        based on transmitting the information on the first zone, obtaining information on first activity of a user related to the first zone from the wearable electronic device through the communication module;
        obtaining a first command for controlling a head mounted display (HMD) device (204), based on the first activity information and the information on the first zone; and
        transmitting, through the communication module, the first command to the HMD device.

13. The method of claim 12, wherein the obtaining of the first command comprises obtaining the first command for displaying augmented reality information in the HMD device (204), based on the first activity and the first zone.

14. The method according to one of claim 12 to claim 13, wherein the obtaining of the first command comprises identifying a pre-trained usage pattern of the HMD device, based on the first activity and the first zone.

**15.** The method according to claim 14, wherein the obtaining of the first command comprises determining the first command based on the pre-trained usage pattern.

**Patentansprüche**

**1.** Elektronische Vorrichtung (202), umfassend:

ein GPS-Modul (240);
ein Kommunikationsmodul (250);
einen Speicher (230); und
einen Prozessor (220),
wobei der Prozessor zu Folgendem konfiguriert ist:

Identifizieren, dass die elektronische Vorrichtung in einen designierten Raum eingetreten ist, unter Verwendung des GPS-Moduls;
Empfangen von ersten Kommunikationssignalinformationen über ein Kommunikationssignal, das durch eine tragbare elektronische Vorrichtung (201) empfangen wird, von der tragbaren elektronischen Vorrichtung durch das Kommunikationsmodul;
**dadurch gekennzeichnet, dass** der Prozessor ferner zu Folgendem konfiguriert ist:

Identifizieren einer ersten Zone, in der sich die tragbare elektronische Vorrichtung befindet, aus einer Vielzahl von Zonen, die in dem designierten Raum beinhaltet sind, durch Durchführen von Clustering an den ersten Kommunikationssignalinformationen;
Übertragen von Informationen über die erste Zone durch das Kommunikationsmodul an die tragbare elektronische Vorrichtung;
Erhalten von Informationen über eine erste Aktivität eines Benutzers, die sich auf die erste Zone bezieht, von der tragbaren elektronischen Vorrichtung durch das Kommunikationsmodul auf Grundlage des Übertragens der Informationen über die erste Zone;
Erhalten eines ersten Befehls zum Steuern einer Head-Mounted-Display-(HMD-)Vorrichtung (204) auf Grundlage der ersten Aktivitätsinformationen und der Informationen über die erste Zone; und
Übertragen des ersten Befehls durch das Kommunikationsmodul an die HMD-Vorrichtung.

**2.** Elektronische Vorrichtung nach Anspruch 1, wobei der Prozessor zu Folgendem konfiguriert ist:
Erhalten des ersten Befehls zum Anzeigen von Informationen erweiterter Realität in der HMD-Vorrichtung (204) auf Grundlage der ersten Aktivität und der ersten Zone.

**3.** Elektronische Vorrichtung nach einem beliebigen von Anspruch 1 bis Anspruch 2, wobei der Prozessor dazu konfiguriert ist, ein vortrainiertes Nutzungsmuster der HMD-Vorrichtung auf Grundlage der ersten Aktivität und der ersten Zone zu identifizieren.

**4.** Elektronische Vorrichtung nach Anspruch 3, wobei der Prozessor dazu konfiguriert ist, den ersten Befehl auf Grundlage des vortrainierten Nutzungsmusters zu bestimmen.

**5.** Elektronische Vorrichtung nach einem beliebigen von Anspruch 1 bis Anspruch 4, wobei der Prozessor dazu konfiguriert ist, durch Vergleichen der ersten Kommunikationssignalinformationen mit einer Vielzahl von Abschnitten von Kommunikationssignalinformationen, die auf dem Speicher gespeichert sind, die erste Zone zu identifizieren.

**6.** Elektronische Vorrichtung nach einem beliebigen von Anspruch 1 bis Anspruch 5, wobei der Prozessor dazu konfiguriert ist, auf Grundlage des Identifizierens, dass eine Ähnlichkeit zwischen den ersten Kommunikationssignalinformationen und einem Cluster von einem oder mehreren Clustern, die durch Clustern der Vielzahl von Abschnitten von Kommunikationssignalinformationen erhalten werden, größer als ein Schwellenwert ist, eine Zone, die dem einen Cluster entspricht, als die erste Zone zu bestimmen.

**7.** Elektronische Vorrichtung nach einem beliebigen von Anspruch 1 bis Anspruch 6, wobei der Prozessor zu Folgendem konfiguriert ist:

Speichern der ersten Kommunikationssignalinformationen auf dem Speicher; und

Aufteilen des designierten Raums in eine oder mehrere Zonen durch Clustern der Vielzahl von Abschnitten von Kommunikationssignalinformationen, welche die ersten Kommunikationssignalinformationen umfassen, die auf dem Speicher gespeichert sind.

8. Elektronische Vorrichtung nach einem von Anspruch 1 bis Anspruch 7, wobei der Prozessor dazu konfiguriert ist, ferner eine Silhouettenanalyse und/oder Ähnlichkeitsanalyse an der Vielzahl von Abschnitten von geclusterten Kommunikationssignalinformationen durchzuführen, um die eine oder mehreren Zonen zu bestimmen.

9. Elektronische Vorrichtung nach einem von Anspruch 1 bis Anspruch 8, wobei der Prozessor zu Folgendem konfiguriert ist:

Erhalten von Informationen über eine oder mehrere Vorrichtungen, die sich um die tragbare elektronische Vorrichtung herum befinden, von der tragbaren elektronischen Vorrichtung durch das Kommunikationsmodul; Erhalten von Informationen über eine Aktivität des Benutzers, die durch die tragbare elektronische Vorrichtung in der einen oder den mehreren Zonen erfasst wird; und Durchführen einer Kennzeichnung an der einen oder den mehreren Zonen auf Grundlage von Informationen über die Aktivität und Informationen über die eine oder mehreren Vorrichtungen.

10. Elektronische Vorrichtung nach einem von Anspruch 1 bis Anspruch 9, wobei der Prozessor zu Folgendem konfiguriert ist:

Erhalten von Informationen über eine erste Anwendung, die durch die HMD-Vorrichtung ausgeführt wird, von der HMD-Vorrichtung auf Grundlage des Identifizierens, dass die tragbare elektronische Vorrichtung identifiziert, dass sich der Benutzer während des Durchführens der ersten Aktivität in der ersten Zone befindet; und Trainieren eines Nutzungsmusters durch den Benutzer in Bezug auf die HMD-Vorrichtung auf Grundlage der ersten Aktivität, der ersten Zone und der ersten Anwendung.

11. Elektronische Vorrichtung nach Anspruch 10, wobei der Prozessor dazu konfiguriert ist, den ersten Befehl in Bezug auf die erste Anwendung auf Grundlage der ersten Aktivität und der ersten Zone zu bestimmen.

12. Verfahren zum Betrieb einer elektronischen Vorrichtung (202), wobei das Verfahren Folgendes umfasst:

Identifizieren, dass die elektronische Vorrichtung in einen designierten Raum eingetreten ist, unter Verwendung eines GPS-Moduls (240), das in der elektronischen Vorrichtung beinhaltet ist; Empfangen von ersten Kommunikationssignalinformationen über ein Kommunikationssignal, das durch eine tragbare elektronischen Vorrichtung (201) empfangen wird, von der tragbaren elektronischen Vorrichtung durch ein Kommunikationsmodul (250), das in der elektronischen Vorrichtung beinhaltet ist; **gekennzeichnet durch**:

Identifizieren einer ersten Zone, in der sich die tragbare elektronische Vorrichtung befindet, aus einer Vielzahl von Zonen, die in dem designierten Raum beinhaltet sind, durch Durchführen von Clustering an den ersten Kommunikationssignalinformationen; Übertragen von Informationen über die erste Zone durch das Kommunikationsmodul an die tragbare elektronische Vorrichtung; Erhalten von Informationen über eine erste Aktivität eines Benutzers, die sich auf die erste Zone bezieht, von der tragbaren elektronischen Vorrichtung durch das Kommunikationsmodul auf Grundlage des Übertragens der Informationen über die erste Zone; Erhalten eines ersten Befehls zum Steuern einer Head-Mounted-Display-(HMD-)Vorrichtung (204) auf Grundlage der ersten Aktivitätsinformationen und der Informationen über die erste Zone; und Übertragen des ersten Befehls durch das Kommunikationsmodul an die HMD-Vorrichtung.

13. Verfahren nach Anspruch 12, wobei das Erhalten des ersten Befehls Erhalten des ersten Befehls zum Anzeigen von Informationen erweiterter Realität in der HMD-Vorrichtung (204) auf Grundlage der ersten Aktivität und der ersten Zone umfasst.

14. Verfahren nach einem von Anspruch 12 bis Anspruch 13, wobei das Erhalten des ersten Befehls Identifizieren eines vortrainierten Nutzungsmusters der HMD-Vorrichtung auf Grundlage der ersten Aktivität und der ersten Zone umfasst.

**15.** Verfahren nach Anspruch 14, wobei das Erhalten des ersten Befehls Bestimmen des ersten Befehls auf Grundlage des vortrainierten Nutzungsmusters umfasst.

**Revendications**

1. Dispositif électronique (202) comprenant :

   un module GPS (240) ;
   un module de communication (250) ;
   une mémoire (230) ; et
   un processeur (220),
   dans lequel le processeur est configuré pour :

   identifier, à l'aide du module GPS, que le dispositif électronique est entré dans un espace désigné ;
   recevoir, au travers du module de communication, en provenance d'un dispositif électronique portable (201), de premières informations de signal de communication sur un signal de communication reçu par le dispositif électronique portable ;
   **caractérisé en ce que** le processeur est en outre configuré pour :

   identifier une première zone où le dispositif électronique portable est situé, parmi une pluralité de zones comprises dans l'espace désigné en réalisant un regroupement sur les premières informations de signal de communication ;
   transmettre, au travers du module de communication, des informations sur la première zone au dispositif électronique portable ;
   sur la base de la transmission des informations sur la première zone, obtenir, au travers du module de communication, en provenance du dispositif électronique portable, des informations sur une première activité d'un utilisateur liée à la première zone ;
   obtenir un premier ordre pour commander un dispositif d'affichage monté sur la tête (HMD) (204), sur la base des premières informations d'activité et des informations sur la première zone ; et
   transmettre, au travers du module de communication, le premier ordre au dispositif HMD.

2. Dispositif électronique de la revendication 1, dans lequel le processeur est configuré pour :
   obtenir le premier ordre pour afficher des informations de réalité augmentée dans le dispositif HMD (204), sur la base de la première activité et de la première zone.

3. Dispositif électronique selon l'une quelconque des revendications 1 à 2, dans lequel le processeur est configuré pour identifier un modèle d'utilisation pré-entraîné du dispositif HMD, sur la base de la première activité et de la première zone.

4. Dispositif électronique selon la revendication 3, dans lequel le processeur est configuré pour déterminer le premier ordre sur la base du modèle d'utilisation pré-entraîné.

5. Dispositif électronique selon l'une quelconque des revendications 1 à 4, dans lequel le processeur est configuré pour identifier la première zone en comparant les premières informations de signal de communication avec une pluralité d'informations de signal de communication stockées dans la mémoire.

6. Dispositif électronique selon l'une quelconque des revendications 1 à 5, dans lequel le processeur est configuré pour, sur la base de l'identification du fait qu'une similitude entre les premières informations de signal de communication et un regroupement parmi un ou plusieurs regroupements obtenus en regroupant la pluralité d'informations de signal de communication est supérieure à une valeur de seuil, déterminer une zone correspondant au regroupement en tant que première zone.

7. Dispositif électronique selon l'une quelconque des revendications 1 à 6, dans lequel le processeur est configuré pour :

   stocker les premières informations de signal de communication dans la mémoire ; et
   diviser l'espace désigné en une ou plusieurs zones en regroupant la pluralité d'informations de signal de communication comprenant les premières informations de signal de communication stockées dans la mémoire.

8. Dispositif électronique selon l'une des revendications 1 à 7, dans lequel le processeur est configuré pour réaliser en outre une analyse de silhouette et/ou une analyse de similitude sur la pluralité d'informations de signal de communication regroupées pour déterminer les une ou plusieurs zones.

9. Dispositif électronique selon l'une des revendications 1 à 8, dans lequel le processeur est configuré pour :

obtenir des informations sur un ou plusieurs dispositifs situés autour du dispositif électronique portable en provenance du dispositif électronique portable au travers du module de communication ;
obtenir des informations sur une activité de l'utilisateur, détectée par le dispositif électronique portable dans les une ou plusieurs zones ; et
réaliser un étiquetage sur les une ou plusieurs zones, sur la base d'informations sur l'activité et d'informations sur les un ou plusieurs dispositifs.

10. Dispositif électronique selon l'une des revendications 1 à 9, dans lequel le processeur est configuré pour :

sur la base de l'identification du fait que le dispositif électronique portable identifie que l'utilisateur est situé dans la première zone lors de la réalisation de la première activité, obtenir des informations sur une première application exécutée par le dispositif HMD en provenance du dispositif HMD ; et
entraîner un modèle d'utilisation par l'utilisateur par rapport au dispositif HMD, sur la base de la première activité, de la première zone et de la première application.

11. Dispositif électronique selon la revendication 10, dans lequel le processeur est configuré pour déterminer le premier ordre en lien avec la première application, sur la base de la première activité et de la première zone.

12. Procédé permettant le fonctionnement d'un dispositif électronique (202), le procédé comprenant :

l'identification, à l'aide d'un module GPS (240) compris dans le dispositif électronique, du fait que le dispositif électronique est entré dans un espace désigné ;
la réception, au travers d'un module de communication (250) compris dans le dispositif électronique, en provenance d'un dispositif électronique portable (201), de premières informations de signal de communication sur un signal de communication reçu par le dispositif électronique portable ;
**caractérisé par** :

l'identification d'une première zone où le dispositif électronique portable est situé, parmi une pluralité de zones comprises dans l'espace désigné en réalisant un regroupement sur les premières informations de signal de communication ;
la transmission, au travers du module de communication, d'informations sur la première zone au dispositif électronique portable ;
sur la base de la transmission des informations sur la première zone, l'obtention d'informations sur une première activité d'un utilisateur liée à la première zone en provenance du dispositif électronique portable au travers du module de communication ;
l'obtention d'un premier ordre pour commander un dispositif d'affichage monté sur la tête (HMD) (204), sur la base des premières informations d'activité et des informations sur la première zone ; et
la transmission, au travers du module de communication, du premier ordre au dispositif HMD.

13. Procédé de la revendication 12, dans lequel l'obtention du premier ordre comprend l'obtention du premier ordre pour afficher des informations de réalité augmentée dans le dispositif HMD (204), sur la base de la première activité et de la première zone.

14. Procédé selon l'une des revendications 12 à 13, dans lequel l'obtention du premier ordre comprend l'identification d'un modèle d'utilisation pré-entraîné du dispositif HMD, sur la base de la première activité et de la première zone.

15. Procédé selon la revendication 14, dans lequel l'obtention du premier ordre comprend la détermination du premier ordre sur la base du modèle d'utilisation pré-entraîné.

FIG. 1

FIG. 2A

201

WEARABLE ELECTRONIC DEVICE

211

SENSOR

212

PROCESSOR

218

COMMUNICATION
MODULE

213

MEMORY

202

ELECTRONIC DEVICE

240

GPS MODULE

250

COMMUNICATION
MODULE

220

PROCESSOR

230

MEMORY

204

COMMUNICATION
MODULE

285

280

MEMORY

270

PROCESSOR

290

DISPLAY

275

CAMERA

VST DEVICE

# FIG. 2B

| WEARABLE ELECTRONIC DEVICE /201 | ELECTRONIC DEVICE /202 | VST DEVICE /204 |
|---|---|---|

IDENTIFY ENTRY IN DESIGNATED SPACE ~301

NOTIFY ENTRY ~303

IDENTIFY USER'S ACTIVITY ~305

RECEIVE COMMUNICATION SIGNAL ~307

TRANSMIT FIRST COMMUNICATION SIGNAL INFORMATION ~309

PERFORM CLUSTERING ON FIRST COMMUNICATION SIGNAL INFORMATION ~311

TRANSMIT INFORMATION ON A FIRST ZONE ~313

IDENTIFY FIRST ZONE IN WHICH WEARABLE ELECTRONIC DEVICE IS LOCATED ~315

TRANSMIT ACTIVITY INFORMATION RELATED TO A FIRST ZONE 317~

DETERMINE AUGMENTED REALITY INFORMATION ACCORDING TO USER PATTERN AND GENERATE COMMAND ~319

TRANSMIT COMMAND ~321

323~ DISPLAY AUGMENTED REALITY INFORMATION

# FIG. 3

START

OBTAIN SENSING SIGNAL
THROUGH SENSOR — 401

EXTRACT FEATURE OF SENSING SIGNAL — 403

IDENTIFY USER'S ACTIVITY THROUGH
MACHINE LEARNING-BASED
CLASSIFIER MODEL — 405

END

# FIG. 4A

410

Training Phase

430

ACTIVITY
LEARNER

440

CLASSIFIER
MODELING UNIT

415

SIGNAL
PRE-PROCESSOR

420

FEATURE
EXTRACTOR

450

CLASSIFIER
MODEL

ACTIVITY
INFORMATION

Recognition Phase

FIG. 4B

START

OBTAIN FIRST COMMUNICATION SIGNAL INFORMATION ON COMMUNICATION SIGNAL — 501

PERFORM CLUSTERING ON FIRST COMMUNICATION SIGNAL INFORMATION — 503

IDENTIFY USER'S ACTIVITY AND FIRST ZONE WHERE WEARABLE ELECTRONIC DEVICE IS LOCATED — 505

IDENTIFY PRE-LEARNED USAGE PATTERN OF VST DEVICE, BASED ON ACTIVITY AND FIRST ZONE — 507

DETERMINE AUGMENTED REALITY INFORMATION, BASED ON USAGE PATTERN — 509

GENERATE AND TRANSMIT COMMAND — 511

END

# FIG. 5A

START

OBTAIN FIRST COMMUNICATION SIGNAL
INFORMATION ON COMMUNICATION SIGNAL — 551

PERFORM CLUSTERING ON FIRST
COMMUNICATION SIGNAL INFORMATION — 553

IDENTIFY USER'S ACTIVITY AND FIRST ZONE WHERE
WEARABLE ELECTRONIC DEVICE IS LOCATED — 555

LABEL FIRST ZONE, BASED ON INFORMATION ON
DEVICES AROUND WEARABLE ELECTRONIC DEVICE — 557

OBTAIN APPLICATION
INFORMATION FROM VST DEVICE — 559

LEARN USER'S USAGE PATTERN, BASED ON
ACTIVITY, FIRST ZONE, AND APPLICATION — 561

STORE LEARNED USAGE PATTERN — 563

END

# FIG. 5B

FIG. 6

t-SNE with clustered label

● N=1
◉ N=2
◒ N=3
○ N=4
◇ exemplar

silhouette analysis - (mean : 0.5667)

silhouette coef s(i)

similarity matrix - (max : 0.022222)

(a)

(b)

(c)

FIG. 7A

EP 4 383 050 B1

Bathroom～710    Dining room～720

Bedroom

730

Study

740

FIG. 7B

FIG. 8

901

INPUT → ENCODING `910`

KNOWLEDGE BASE `922`

`920`

INFERENCE ENGINE `925`

DECODING `930` → OUTPUT

# FIG. 9A

950

| Zone | Activity | Peripheral device | MAC address | Distance |
|------|----------|-------------------|-------------|----------|
| A | Brushing teeth | - | - | - |
| A | Washing hands | - | - | - |
| B | Eating | Refrigerator | BA:Z9:4K:ES:ME:0X | 1m |
| C | Sleeping | TV | 3E:IW:L4:BN:52:S8 | 3m |
| D | Working | Laptop | JS:1D:QH:35:NA:6G | 0.3m |

# FIG. 9B

FIG. 10

201

WEARABLE
ELECTRONIC DEVICE

IDENTIFY ENTRY IN
DESIGNATED SPACE ⌐ 1101

IDENTIFY USER'S ACTIVITY ⌐ 1103

IDENTIFY FIRST ZONE WHERE
WEARABLE ELECTRONIC
DEVICE IS LOCATED ⌐ 1105

DETERMINE SPECIFIC
AUGMENTED REALITY
INFORMATION ACCORDING TO
USER PATTERN AND
GENERATE COMMAND ⌐ 1107

TRANSMIT COMMAND

1109

204

VST DEVICE

DISPLAY SPECIFIC AUGMENTED
REALITY INFORMATION ⌐ 1111

# FIG. 11

FIG. 12A

FIG. 12B

1203

Do not disturb

1235

1230

# FIG. 12C

1204          1245

1250          1240

# FIG. 12D

**REFERENCES CITED IN THE DESCRIPTION**

**Patent documents cited in the description**

- EP 2996359 A1